(19)

Europäisches
Patentamt
European
Patent Office
Office européen
des brevets

(11)  **EP 2 958 314 A1**

(12)  **EUROPEAN PATENT APPLICATION**

(43) Date of publication:
**23.12.2015  Bulletin 2015/52**

(51) Int Cl.:
**H04N 1/60** *(2006.01)*      **H04N 1/58** *(2006.01)*

(21) Application number: **15168819.9**

(22) Date of filing: **22.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.06.2014  JP 2014126190**

(71) Applicant: **Seiko Epson Corporation**
**Shinjuku-ku**
**Tokyo (JP)**

(72) Inventor: **Okumura, Yoshio**
**Suwa-shi, Nagano 392-8502 (JP)**

(74) Representative: **Miller Sturt Kenyon**
**9 John Street**
**London WC1N 2ES (GB)**

(54)  **IMAGE PROCESSING APPARATUS AND IMAGE PROCESSING PROGRAM**

(57)    An image processing apparatus, which generates data for reproducing a color of a dot image formed by a printer using a first color material, in an image forming apparatus, includes a grayscale data generation unit that generates input grayscale data in which a grayscale value corresponding to a dot area ratio is stored in a peripheral part of a dot, and a grayscale value corresponding to a color of a dot portion of the dot image is stored in a core part surrounded by the peripheral part, on the basis of dot data indicating the dot image, and a color conversion unit that converts the input grayscale data into output grayscale data indicating a usage amount of a second color material used in the image forming apparatus, in which the color conversion unit performs first color conversion on the grayscale value of the core part and performs second color conversion different from the first color conversion on the grayscale value of the peripheral part.

FIG. 1

FLOW OF DOT PROOF PRINTING

ACQUIRE CTP DOT DATA AND ATTACHED DATA (S102)

EXAMPLE: 2400 dpi × 2400 dpi, TWO GRAYSCALES, 175 lines/inch

CALCULATE DOT AREA RATIO r FOR EACH UNIT REGION (S104)
EXAMPLE: ABOUT 1 mm × 1 mm UNIT

LOW-RESOLUTION MULTI-GRAYSCALE PROCESS (S106)
DIVIDED INTO CORE PART AND PERIPHERAL PART (S108)
STORE GRAYSCALE VALUE CORRESPONDING TO DOT AREA RATIO r IN PERIPHERAL PART (S110)

EXAMPLE: 1440 dpi × 1440 dpi, 256 GRAYSCALES

CORE PART      (Dc, Dm, Dy, Dk)       PERIPHERAL PART   (Rc, Rm, Ry, Rk)

COLOR PART PLATE (S114) (DT4)       DLP CONVERSION (S112) (DT3) → COLOR PART PLATE (S114) (DT4)

HT PROCESS (S116) → COMBINE HT RESULTS (S118) (DT5) → HT PROCESS (S116)

DOT PROOF PRINTING (S120)

EP 2 958 314 A1

**Description**

BACKGROUND

1. Technical field

The present invention relates to a technology of generating data for reproducing colors of a dot image which is formed by a printer.

2. Related Art

In order to check color tones and the like of printed matter formed by a printer body prior to using the printer body, a proof is formed by a proof printer for checking. In a printer body such as an offset printer, for example, printed matter is formed by using dots having four kinds of color materials including cyan, magenta, yellow, and black (CMYK). If the same CMYK color materials as in the printer body are used in a proof printer, cost increases, and thus an ink jet printer or the like which uses ink that is different from the color materials of the printer body is used as the proof printer.
JP-A-2010-264739 discloses a printing system in which a dot structure of CMYK formed by an offset printer is color-reproduced by an ink jet printer. The printing system receives, for example, binarized dot image data with 2400 dpi, performs resolution conversion into an output resolution of 1440 dpi of the printer and multi-grayscale conversion into 256 grayscales, and performs a smoothing process, a color conversion process, and a halftone process on the obtained image data so as to print a proof. At this time, in order to minimize a phenomenon in which moire related to Y which is invisible in offset printing is visible in the proof, the smoothing process is performed only on a Y component of image data, or a stronger smoothing process is performed on the Y component than on CMK components.
Since input dot image data is binary data, a grayscale value indicating a specific high density is stored in a pixel of a portion where dots are formed among respective pixels having multi-grayscale image data, and a grayscale value indicating a density of zero is stored in a pixel of a portion where dots are not formed. This is the same regardless of the magnitude of a dot area ratio indicating a ratio of an area of a dot portion to the unit area of dot printed matter. On the other hand, for example, even in a dot image in which only C is used, color tones may be different in an image having a large dot area ratio and an image having a small dot area ratio. In the printing system, even if dot area ratios are different from each other, among pixels in image data with 256 grayscales, the same grayscale value is stored in pixels of a portion where dots are formed, and thus a difference in color tones of dot images due to the above-described difference in the dot area ratios may not be reproduced. Although a grayscale value indicating an intermediate grayscale is stored in some pixels through the smoothing process, the grayscale value indicating the intermediate grayscale is generated regardless of the dot area ratio, and thus the above-described problem is not solved.
The above-described problem is not limited to a proof technology using an ink jet printer and a proof technology for an offset printer, and also occurs in other various technologies.

SUMMARY

An advantage of some aspects of the invention is to provide a technology capable of improving color reproduction accuracy of a dot image.
According to an aspect of the invention, there is provided an image processing apparatus which generates data for reproducing a color of a dot image formed by a printer using a first color material, in an image forming apparatus, the image processing apparatus including a grayscale data generation unit that generates input grayscale data in which a grayscale value corresponding to a dot area ratio is stored in a peripheral part of a dot, and a grayscale value corresponding to a color of a dot portion of the dot image is stored in a core part surrounded by the peripheral part, on the basis of dot data indicating the dot image; and a color conversion unit that converts the input grayscale data into output grayscale data indicating a usage amount of a second color material used in the image forming apparatus, in which the color conversion unit performs first color conversion on the grayscale value of the core part and performs second color conversion different from the first color conversion on the grayscale value of the peripheral part.
According to the aspect, it is possible to provide a technology capable of improving color reproduction accuracy of a dot image.
The invention is applicable to a composite apparatus including the image processing apparatus, an image processing method including steps corresponding to the above-described respective units, a processing method for the composite apparatus, including the image processing method, an image processing program causing a computer to realize functions corresponding to the above-described respective units, a processing program for the composite apparatus, including the image processing program, a computer readable medium recording the program thereon, a look-up table used for color conversion, a profile used for the second color conversion, and the like. The above-described apparatus may be constituted by a plurality of distributed portions.

BRIEF DESCRIPTION OF THE DRAWINGS

Embodiments of the invention will now be described by way of example only with reference to the accompanying drawings, wherein like numbers reference like elements.

Fig. 1 is a diagram schematically exemplifying a flow of dot proof printing.

Fig. 2 is a diagram schematically illustrating an example of a configuration of a proof system.

Fig. 3 is a diagram schematically illustrating an example of calculating a dot area ratio.

Figs. 4A and 4B are diagrams schematically illustrating an example of resolution conversion according to a nearest neighbor method, and Fig. 4C is a schematic diagram for explaining an example of detecting a peripheral portion.

Fig. 5 is a diagram schematically illustrating an example of DLP (profile) conversion of the peripheral portion.

Fig. 6 is a diagram schematically illustrating an example of DLP conversion during mixing of colors.

Fig. 7A is a diagram schematically illustrating an example of a structure of a DLP, and Fig. 7B is a diagram schematically illustrating an example of a structure of an MM_LUT.

Fig. 8 is a block diagram schematically illustrating an example of a configuration of a host apparatus.

Fig. 9 is a flowchart illustrating an example of a printing control process.

Fig. 10 is a diagram schematically illustrating an example of measuring a color chart.

Fig. 11 is a diagram schematically illustrating an example of a structure of a printing color profile for each observation light source.

Fig. 12 is a diagram for explaining a computation example for calculating a color value on the basis of spectral reflectance.

Fig. 13 is a diagram schematically exemplifying a flow of a process in which an ink amount set is optimized.

Fig. 14 is a diagram schematically exemplifying a state in which the ink amount set is being optimized.

Fig. 15 is a flowchart illustrating an example of a color reproduction image output control process.

Fig. 16 is a diagram schematically exemplifying a structure of a spectral reflectance database.

Figs. 17A and 17B are diagrams schematically exemplifying a spectral Neugebauer model and a Murray-Davies model.

Figs. 18A to 18C are diagrams schematically exemplifying a cellular Yule-Nielsen spectral Neugebauer model.

Fig. 19 is a flowchart illustrating an example of an MM_LUT generation process.

Fig. 20 is a flowchart illustrating an example of a DLP generation process.

Figs. 21A to 21C are diagrams schematically illustrating an example of correcting an output value of a DLP.

Figs. 22A and 22B are diagrams schematically illustrating an example of an exterior of a dot image corresponding to a dot area ratio.

Fig. 23 is a diagram illustrating a state in which output grayscale data is generated when the entire dot is converted to have the maximum grayscale value in a modification example.

DESCRIPTION OF EXEMPLARY EMBODIMENTS

Hereinafter, an embodiment of the invention will be described. The following embodiment is only an example of the invention, and all features described in the embodiment are not essential to solving means of the invention.

*(1) Summary of Present Technology*

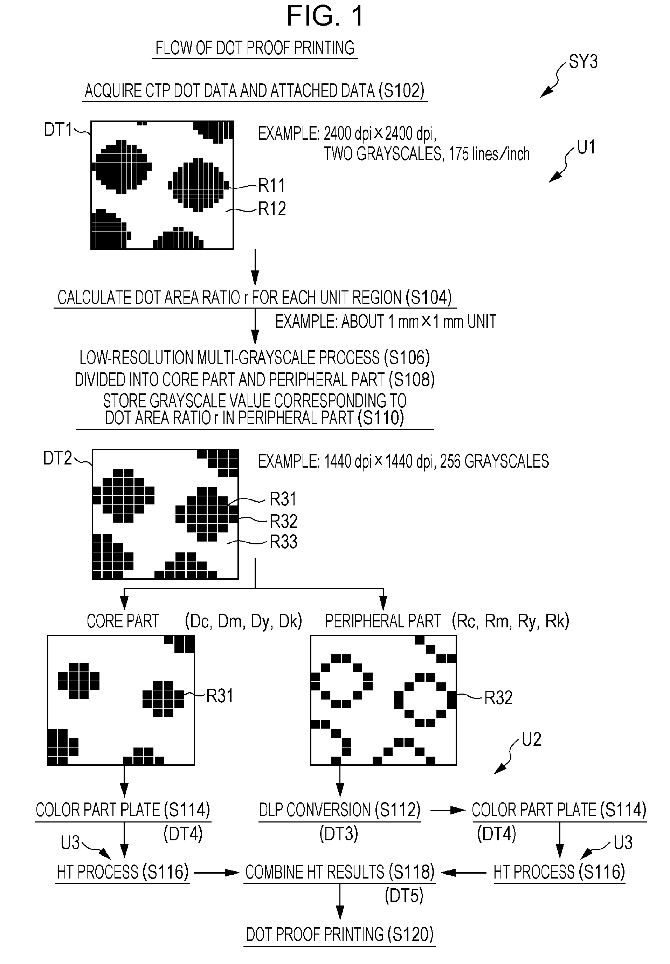

First, a description will be made of a summary of the present technology of the present invention with reference to Figs. 1 to 22B.

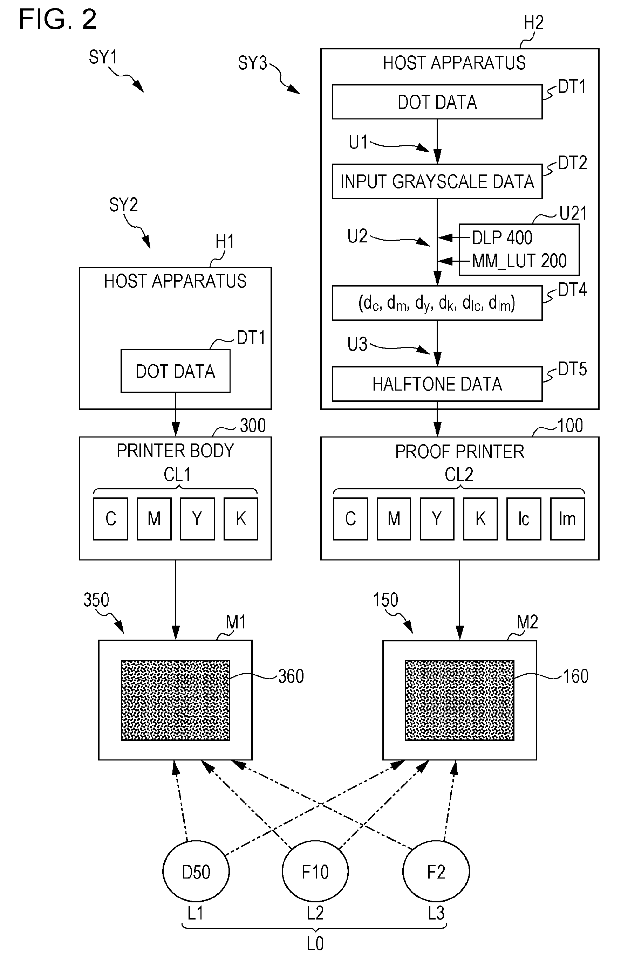

An image processing apparatus exemplified as a host apparatus H2 in Fig. 2 and the like includes a grayscale data generation unit U1 and a color conversion unit U2, and generates data for reproducing colors of a dot image 360 formed by a printer (a printer body 300) which uses first color materials CL1, using an image forming apparatus (a proof printer 100). As illustrated in Fig. 1 and the like, the grayscale data generation unit U1 generates input grayscale data DT2 in which grayscale values (for example, grayscale values indicating Rc, Rm, Ry, and Rk) corresponding to a dot area ratio r are stored in a peripheral part R32 of dots, and grayscale values (for example, grayscale values indicating Dc, Dm, Dy, and Dk) corresponding to colors of a dot portion R11 of the dot image 360 are stored in a core part R31 surrounded by the peripheral part R32, on the basis of dot data DT1 indicating the dot image 360. The color conversion unit U2 converts the input grayscale data DT2 into output grayscale data DT4 indicating usage amounts (for example, $d_c$, $d_m$, dy, $d_k$, $d_{lc}$, and $d_{lm}$ illustrated in Fig. 2) of second color materials CL2 used in the image forming apparatus (100). The color conversion unit U2 performs first color conversion on the grayscale values of the core part R31, and performs second color conversion which is different from the first color conversion on the grayscale values of the peripheral part R32.

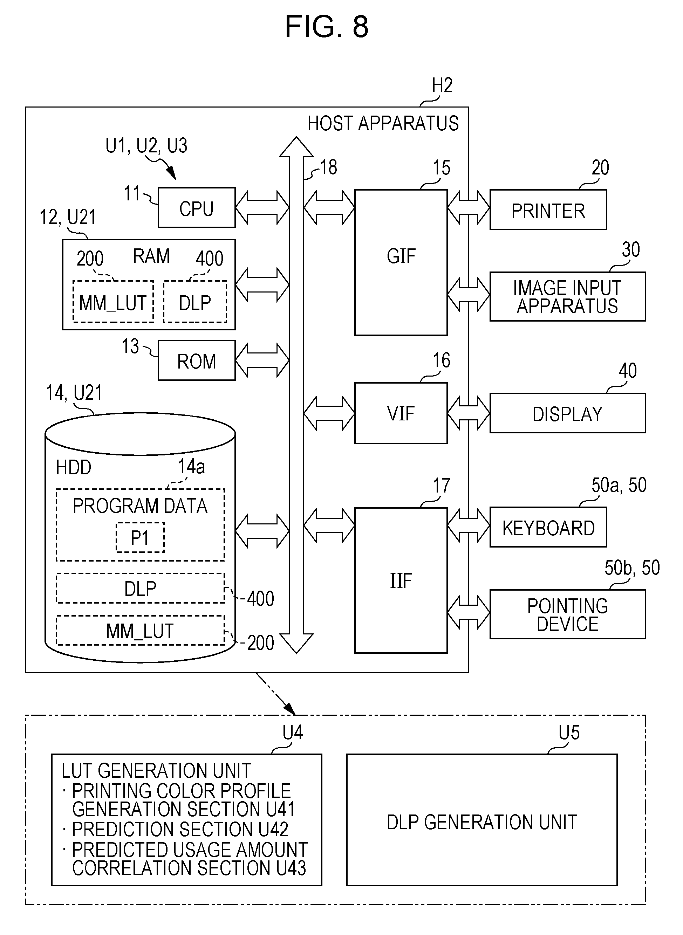

An image processing program P1 exemplified in Fig. 8 is a program which generates the data for reproducing colors of the dot image 360 formed by the printer (300) which uses the first color materials CL1, in the image forming apparatus (100), and causes a computer to realize a grayscale data generation function and a color conversion function. In the grayscale data generation function, on the basis of the dot data DT1 indicating the dot image 360, the input grayscale data DT2 is generated in which grayscale values corresponding to the dot area ratio r are stored in the peripheral part R32 of the dot, and grayscale values corresponding to colors of the dot portion R11 of the dot image 360 are stored in the core part R31 surrounded by the peripheral part R32. In the color conversion function, the input grayscale data DT2 is converted into the output grayscale data DT4 indicating usage amounts of the second color materials CL2 used in the image forming apparatus (100). In the color conversion function, the first color conversion is performed on the grayscale values of the core part R31, and the second color conversion which is different from the first color conversion is performed on the grayscale values of the peripheral part R32.

The input grayscale data DT2 generated on the basis of the dot data DT1 is converted into the output grayscale data DT4 indicating usage amounts of the second color materials CL2 used in the image forming apparatus (100). In the input grayscale data DT2 before being converted, the grayscale values corresponding to the dot area ratio r are stored in the peripheral part R32 of the dot, and the grayscale values corresponding to the colors of the dot portion R11 of the dot image 360 are stored in the core part R31. The first color conversion is performed on the grayscale values of the core part R31, and the second color conversion which is different from the first color conversion is performed on the grayscale values of the peripheral part R32.

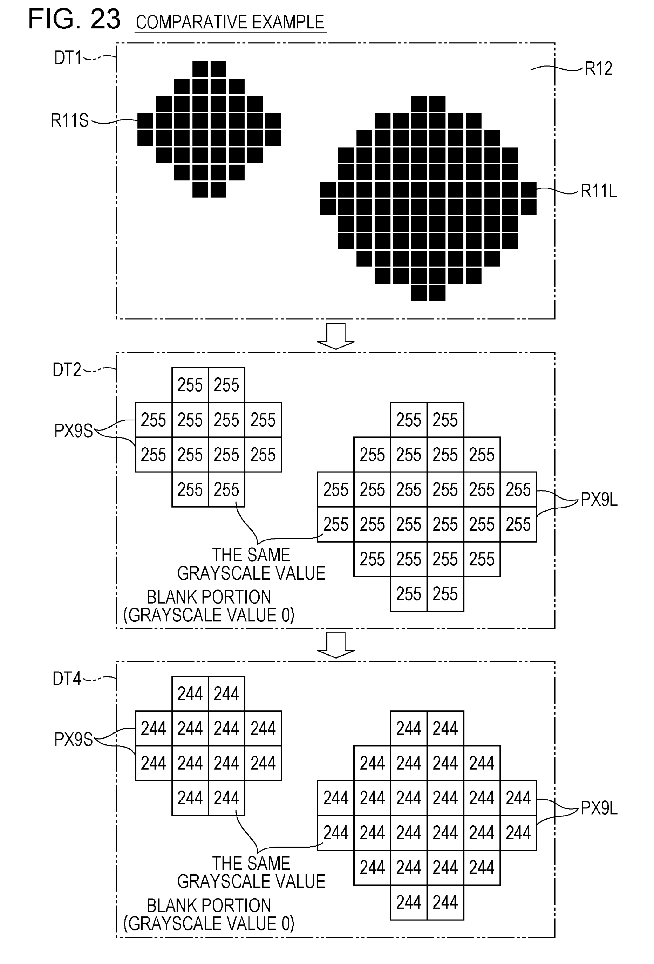

Fig. 23 schematically illustrates a comparative example in which the output grayscale data DT4 is generated in a case where the entire dot is converted to have the maximum grayscale value 255 without performing the second color conversion. In the computer to plate (CTP) dot data DT1 which is used in a printer body and is binary data having a predetermined resolution, a grayscale value of 1 is stored in pixels of dot portions R11S and R11L, and a grayscale value of 0 is stored in pixels of a blank portion R12. In order to perform color conversion by using the dot data DT1 and to print a proof, first, resolution conversion for matching the resolution of a color reproduction image which is formed by the proof printer is performed, and it is necessary to generate the input grayscale data DT2 which has multiple grayscales, for example, 256 grayscales.

If a dot area ratio is low, a small dot is included in a dot image. On the other hand, if a dot area ratio is high, a large dot is included in a dot image. As illustrated in Fig. 23, both a small dot (R11S) and a large dot (R11L) are included in the dot image. The same grayscale value of 1 is stored in both of the dot portions R11S and R11L. For this reason, in the input grayscale data DT2, the same maximum grayscale value of 255 is stored in pixels PX9S and PX9L of the dot portions. In addition, it is assumed that the grayscale value of 0 is stored in the blank portion. Since color conversion is performed on each pixel in the input grayscale data DT2 including the pixels PX9S and PX9L, the same grayscale value (244 in Fig. 23) is stored in the pixel PX9S of the small dot portion and the pixel PX9L of the large dot portion in the output grayscale data DT4.

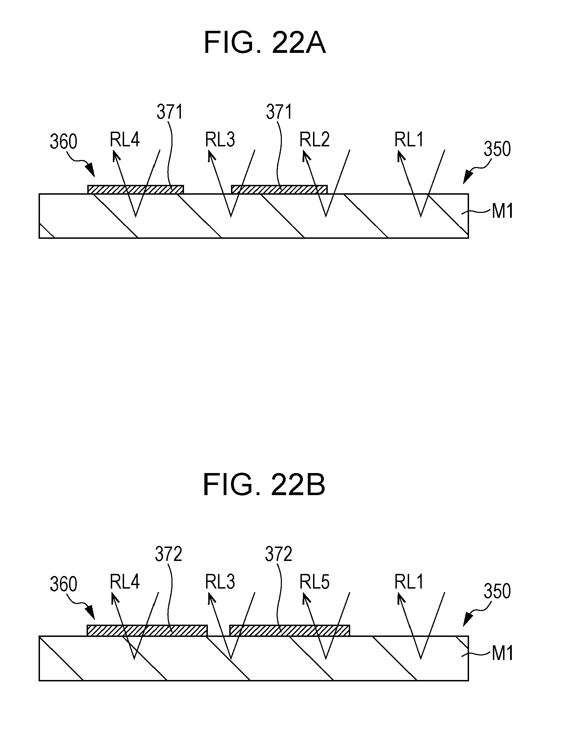

Actually, color tones of a dot image may differ depending on the magnitude of a dot area ratio. Figs. 22A and 22B schematically exemplify that an exterior of the dot image 360 differs depending on the dot area ratio r. In dot printed matter 350, the dot image 360 is formed on a printing medium M1. For this reason, light entering the human eyes includes light RL1 which is incident without passing through a dot 371 and is reflected inside the printing medium M1, light RL2 which is reflected inside the printing medium M1 and is emitted through the dot 371, light RL3 which is incident through the dot 371 and is reflected inside the printing medium M1 so as to be emitted without passing through the dot 371, light RL4 which is incident through the dot 371 and is reflected inside the printing medium M1 so as to be emitted through the dot 371, and the like. The light RL1 to the light RL4, and the like comprehensively act on a color tone of the dot image 360.

Fig. 22B exemplifies the dot printed matter 350 in which a large dot 372 is formed. In this case, an amount of light which passes through the dot increases, and an amount of light which passes through only the printing medium M1 without passing through the dot is reduced. In Figs. 22A and 22B, it is shown that the light RL2 which is reflected inside the printing medium M1 and is emitted through the dot 371 is changed to light RL5 which passes through the dot 372 when being incident and when being emitted. A color tone of the dot image 360 depends on characteristics of the printing medium M1, and thus if dot area ratios are different from each other, the color tone of the dot image may differ. In addition, a thickness of a dot may be changed depending on a dot area ratio. In Figs. 22A and 22B, the dot 371 is relatively thin, and the dot 372 is relatively thick. Characteristics of light passing through a dot depend on a thickness of the dot. Also for this reason, if dot area ratios are different from each other, a color tone of a dot image differs.

As mentioned above, in the comparative example illustrated in Fig. 23, since only the same grayscale value is stored in the pixels PX9S and PX9L even if dot area ratios are different from each other, the color of a color reproduction image having a different dot area ratio cannot be controlled independently. Therefore, a difference in a color tone of a dot image due to a difference in a dot area ratio may not be reproduced.

On the other hand, in the present technology shown in Figs. 1 and the like, grayscale values (for example, grayscale values indicating Dc, Dm, Dy, and Dk) corresponding to colors of the dot portion R11 of the dot image 360 are stored in the core part R31, and grayscale values (for example, grayscale values indicating Rc, Rm, Ry, and Rk) corresponding to the dot area ratio r are stored in the peripheral part R32. Consequently, different grayscale values can be stored in the peripheral part R32 in cases where the dot area ratio r is high and the dot area ratio r is low. A grayscale value of the peripheral part R32 is a grayscale value corresponding to the dot area ratio r, and thus colors of a color reproduction image 160 having different dot area ratios can be controlled separately. For this reason, a difference in a color tone of the dot image 360 due to a difference in the dot area ratio r can be reproduced through the second color conversion on the grayscale value of the peripheral part R32. Therefore, according to the above-described aspect, it is possible to provide a technology capable of improving color reproduction accuracy of a dot image.

Here, the first color material may be any color material as long as the color material is used to form dot printed matter in a printer, and includes not only color materials in which four colors such as CMYK are combined, but also color materials in which five or more colors are combined and color materials in which three or fewer color materials are combined. The second color material may be any color material as long as the color material is used to form a color reproduction image in a printer, and includes not only color materials in which four colors such as CMYK are combined, but also color materials in which five or more colors are combined and color materials in which three or fewer color materials are combined.

The peripheral part of the dot may be present inside a dot, may be present outside the dot, and may be present over the inside and the outside of the dot.

The grayscale value corresponding to the dot area ratio may not only be a value proportional to the dot area ratio r, but also a value proportional to a value (1-r) obtained by subtracting r from 1 (100% in percent), and a value which is not proportional to the values (r and 1-r).

Meanwhile, in the first color conversion, a grayscale value of the core part R31 may be converted according to a correspondence relationship (for example, a color part plate look-up table 200) between usage amounts (for example, Dc, Dm, Dy, and Dk) of the first color materials CL1 used to form the dot image 360 and usage amounts (for example, $d_c$, $d_m$, dy, $d_k$, $d_{lc}$, and $d_{lm}$) of the second color materials CL2 used to form the color reproduction image 160 in the image forming apparatus (100). In the second color conversion, grayscale values (for example, grayscale values indicating Rc, Rm, Ry, and Rk) corresponding to the dot area ratios r may be converted into values indicating the usage amounts of the first color materials CL1 in the correspondence relationship (200). In the second color conversion, the converted values may be converted into grayscale values indicating the usage amounts of the second color materials CL2 according to the correspondence relationship (200). According to the present aspect, the same correspondence relationship (200) is used for conversion of grayscale values of the core part R31 and the peripheral part R32, and thus it is possible to simplify a color conversion process. Alternatively, in the second color conversion, the correspondence relationship (200) for performing the first color conversion need not be used, and a grayscale value of the peripheral part R32 may be converted according to a dedicated correspondence relationship.

The color conversion unit U2 may generate intermediate grayscale data DT3 in which the grayscale values of the peripheral part R32 included in the input grayscale data DT2 are converted into values indicating the usage amounts of the first color materials CL1 in the correspondence relationship (200). In addition, the color conversion unit U2 may convert the intermediate grayscale data DT3 into the output grayscale data DT4 according to the correspondence relationship (200). According to the present aspect, the intermediate grayscale data DT3 obtained by converting a grayscale value of the peripheral part R32 can be collectively converted into the output grayscale data DT4, and thus it is possible to perform a color conversion process at a high speed.

The color conversion unit U2 may include a storage section U21 which stores a profile (for example, a device link profile 400) defining a second correspondence relationship between grayscale values corresponding to the dot area ratios r and the usage amounts of the first color materials CL1 in the correspondence relationship (200). In the second color conversion, grayscale values corresponding to the dot area ratios r may be converted into values indicating the usage amounts of the first color materials CL1 in the correspondence relationship (200) according to the profile (400). In addition, in the second color conversion, the converted values may be converted into grayscale values indicating the usage amounts of the second color materials CL2 according to the correspondence relationship (200). According to the present aspect, the profile (400) is used for color conversion of the peripheral part R32 of the dot, and thus it is possible to simplify a color conversion process. The profile (400) is more easily created than a look-up table dedicated to the second color conversion, and thus it is possible to easily manufacture the image processing apparatus.

The present image processing apparatus may further include a profile generation unit (a DLP generation unit U5 exemplified in Fig. 8) which generates the profile (400) by correlating a grayscale value corresponding to the dot area ratio r with the usage amounts of the first color materials CL1 in the correspondence relationship (200).

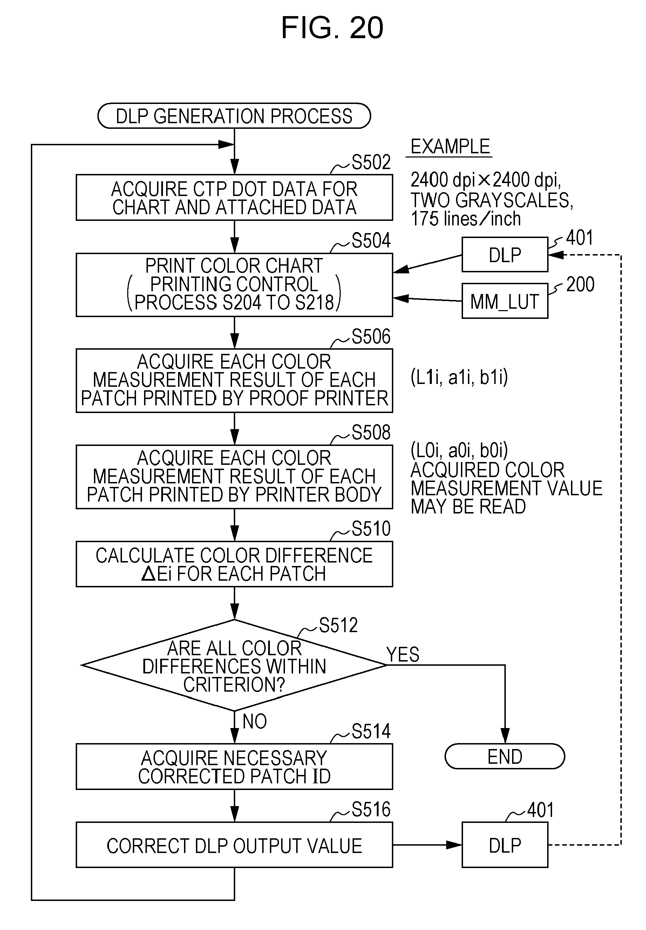

As exemplified in Fig. 20, the present image processing apparatus may further include a profile generation unit (U5) which generates the profile (400) so that a color measurement result of a patch 162 formed by the image forming apparatus (100) when using the profile (400) satisfies a criterion based on a color measurement result of a patch 362 formed by the printer (300). According to the present aspect, since the profile (400) is generated so that a color of the color reproduction image 160 is close to a color of the dot image 360, it is possible to improve color reproduction accuracy of a dot image.

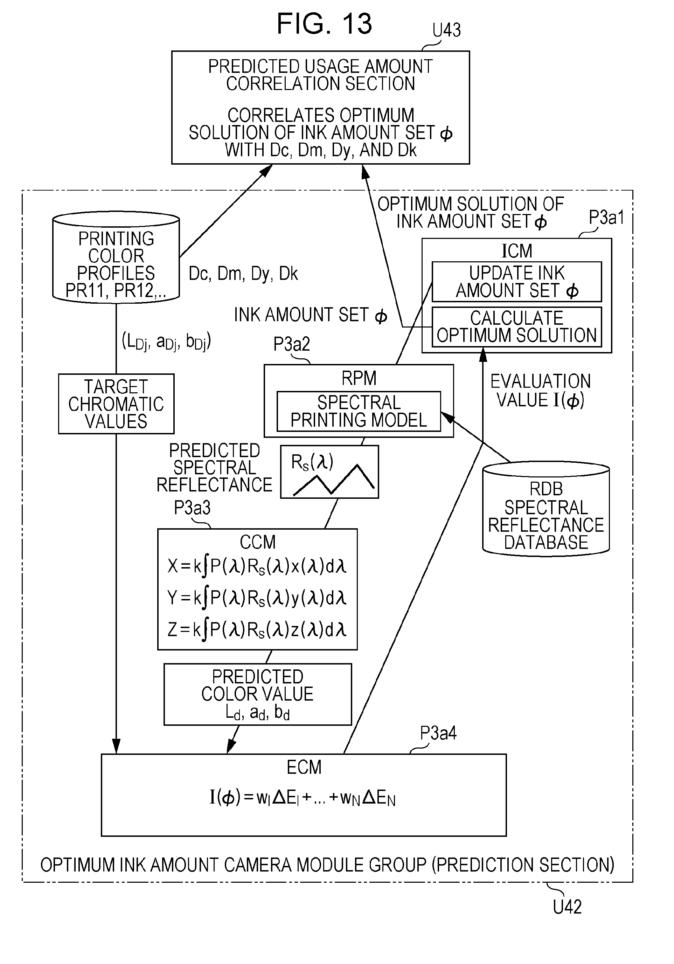

The color conversion unit U2 may include the storage section U21 storing an LUT (a color part plate look-up table) 200 defining the correspondence relationship. The LUT 200 correlates the usage amounts (for example, Dc, Dm, Dy, and Dk) of the first color materials CL1 with the usage amounts (for example, $d_c$, $d_m$, dy, $d_k$, $d_{lc}$, and $d_{lm}$) of the second color materials CL2, predicted so that color values of the second color materials CL2 formed in the color reproduction image 160 are close to target color values for each observation light source L0, on the basis of an evaluation value (for example, I illustrated in Fig. 13) for evaluating proximity to the target color values defined in a printing color profile PR1 which defines a correspondence relationship between the usage amounts (for example, Dc, Dm, Dy, and Dk) of the first color materials CL1 and the target color values (for example, L*a*b* values) in the observation light source L0 of the first color materials CL1 with the usage amounts used in the dot image 360 for each of a plurality of observation light sources L0 for observing the dot image 360. According to the present aspect, metameric matching between the dot image 360 and the color reproduction image 160 is improved for the plurality of observation light sources L0, and thus it is possible to improve color reproduction accuracy of a dot image under a plurality of light sources.

The present image processing apparatus may further include a look-up table (LUT) generation unit U4 which generates the LUT 200 as exemplified in Fig. 8.

The dot data DT1 may be binary data with a predetermined resolution (2400 dpi $\times$ 2400 dpi in the example of Fig. 1). The grayscale data generation unit U1 may convert the resolution of the dot data DT1 into a resolution of the color reproduction image 160 formed by the image forming apparatus (100), and may perform a multi-grayscale process on the dot data DT1 so as to generate the input grayscale data DT2. According to the present aspect, since the resolution of the input grayscale data DT2 can match the resolution of the color reproduction image 160 formed by the image forming apparatus (100), and the number of grayscales of the input grayscale data DT2 is multiple grayscales, which is very suitable for color conversion, it is possible to further improve color reproduction accuracy of a dot image.

*(2) Description of Proof System related to Specific Examples*

Fig. 1 schematically illustrates a flow of dot proof printing performed in an image forming system SY3. Fig. 2 schematically illustrates a proof system SY1 in which a proof 150 of the dot printed matter 350 formed by the printer body (printer) 300 is formed by the proof printer (image forming apparatus) 100. In a case where printed matter is directly formed by the printer body and a color tone or the like is checked, cost increases. Therefore, even if the dot printed matter 350 is not formed, the proof printer 100 forms the color reproduction image 160 of the dot printed matter 350 in order to check a color tone or the like of the dot image 360 on the dot printed matter 350.

The printer body (printer) 300 constituting the printing system SY2 includes an offset printer, a gravure printer, a flexographic printer, and the like. The printer body 300 illustrated in Fig. 2 forms the dot image 360 on the printing medium M1 for the printer body by using the first color materials CL1 having CMYK according to the CTP dot data DT1 which is input from a host apparatus H1. Screen angles of dots having respective colors are frequently set to different angles in order to minimize moire due to interference between the dots. As the screen angles, for example, C is set to 15°, M is set to 45°, Y is set to 0°, and K is set to 75°.

The image forming system SY3 can reproduce a color tone corresponding to the magnitude of a dot area ratio r of the dot image 360 on the printing medium M1 formed by the printer body 300 as faithfully as possible under a plurality of light sources. The proof printer (image forming apparatus) 100 constituting the image forming system SY3 includes an ink jet printer, a wire dot printer, a laser printer, a line printer, a copier, a facsimile, a multi-function peripheral in which some of the printers are combined with each other, and the like. The proof printer 100 illustrated in Fig. 2 is an ink jet printer which forms the color reproduction image 160 on printing medium M2 for a proof printer by using the second color materials CL2 having CMYKlclm. Light cyan (lc) is a color which is included in the same system as that of cyan and is brighter than cyan. Light magenta (lm) is a color which is included in the same system as that of magenta and is brighter than magenta. Of course, the second color materials CL2 may be color materials having CMYKROrGr, or the like. Red (R), orange (Or), or green (Gr) may be replaced with CMY. As the printing medium M2 for a proof printer, a printing medium which is different from the printing medium M1 for a printer body is typically used.

The host apparatus H2 connected to the proof printer 100 converts the input grayscale data DT2 having CMYK into the output grayscale data DT4 indicating the usage amounts $d_c$, $d_m$, dy, $d_k$, $d_{lc}$, and $d_{lm}$ of the second color materials CL2 having CMYKlclm according to a DLP 400 and the MM_LUT 200 read from the storage section U21. Here, the acronym "DLP" stands for a device link profile which is one of the features of the present technology, and corresponds to a profile in the present technology. The acronym "MM_LUT" stands for a metameric matching look-up table, and corresponds to a color part plate LUT. The MM_LUT 200 realizes favorable metameric matching between the dot printed matter 350 and the proof 150 under a plurality of light sources set by a user. The host apparatus H2 forms the color reproduction image 160 having a dot structure according to the usage amounts $d_c$, $d_m$, dy, $d_k$, $d_{lc}$, and $d_{lm}$ obtained on the basis of the MM_LUT 200. Hereinafter, the MM_LUT 200 is simply referred to as an LUT 200. The DLP 400 defines a correspondence relationship which is aimed at minimizing an exterior difference corresponding to the dot area ratio r of the dot image 360, caused by only the LUT 200, and which is set in consideration of bleeding or overflowing of the color materials CL2 having CMYKlclm.

The LUT 200 defining the correspondence relationship between respective usage amounts Dc, Dm, Dy, and Dk of the first color materials CL1 and the usage amounts $d_c$, $d_m$, dy, $d_k$, $d_{lc}$, and $d_{lm}$ of the second color materials CL2 can be said to be a color conversion LUT in that data of a printer body-dependent CMYK four-dimensional color space is converted into data of a proof printer-dependent CMYKlclm color space. In addition, the LUT 200 can be said to be a color part plate LUT in that a usage ratio of CMY and K is converted, a usage ratio of C and lc is converted, and a usage ratio of M and lm is converted.

In a case where an ink usage amount is converted into dots on the printing medium M2, a predetermined halftone process is performed on grayscale data indicating the respective usage amounts $d_c$, $d_m$, dy, $d_k$, $d_{lc}$, and $d_{lm}$ so that the number of grayscales of the grayscale data is reduced, and ink dots are formed on the printing medium M2 by ejecting ink droplets according to obtained multi-value data (steps S116 to S120 of Fig. 1). The halftone process is preferably a process performed according to a dithering method, but a halftone process may be performed according to an error diffusion method, a density pattern method, or the like. The multi-value data is data indicating a situation in which dots are formed, and may be binary data indicating whether or not dots are formed, and may be multi-value data of three or more grayscales which can correspond to dots with different sizes such as a small dot, a medium dot, and a large dot. The binary data may be, for example, data which corresponds to 1 when a dot is formed, and corresponds to 0 when a dot is not formed. Quaternary data may be, for example, data which corresponds to 3 when a large dot is formed, corresponds to 2 when a medium dot is formed, corresponds to 1 when a small dot is formed, and corresponds to 0 when a dot is not formed. An obtained color reproduction image is expressed to occur as a situation in which dots are formed on the printing medium M2.

In the dot image 360 or the color reproduction image 160, a color tone changes depending on the kind of observation light source L0. Here, the reference sign L0 is used when collectively referring to the individual light sources L1 to L3. The standardized observation light sources L0 include a D50 light source, a D55 light source, a D65 light source, a D75 light source, an A light source, an F2 light source, an F7 light source, an F10 light source, an F11 light source, and the like. A change in a color tone also depends on the kind of color material.

For example, in the printing industry, the D50 light source which has a spectral distribution which does not exist in practice is used as a standard light source. Since printing performance is observed under the D50 light source, assurance of color accuracy when a color is viewed under the standard D50 light source is an important factor in a proof printer of a printer. On the other hand, as an environment in which printed matter formed by a printer body and a color reproduction image formed by a proof printer are actually viewed, a light source different from the D50 light source is assumed to be used, and an environment is assumed to be one in which a plurality of light sources are used together, such as an environment in which the D65 light source and the A light source are used together. According to the present technology, it is possible to obtain a favorable metameric matching function under an observation light source for actual viewing.

The host apparatus H1 of the printing system SY2 is a computer which controls the entire printing system and is connected to the printer body 300. The host apparatus H2 of the image forming system SY3 is a computer which controls the entire image forming system and is connected to the proof printer 100. As the host apparatuses H1 and H2, various computers such as a personal computer may be used. The host apparatuses H1 and H2 may transmit and receive data to and from each other via a communication network such as the Internet.

The host apparatus H2 illustrated in Figs. 2 and 8 includes the grayscale data generation unit U1, the color conversion unit U2 including the storage section U21, and a halftone processing unit U3. The respective units U1 to U3 control dot proof printing by performing processes in steps S102 to S120 (hereinafter, the word "step" will be omitted). Hereinafter, a description will be made of a flow of the dot proof printing illustrated in Fig. 1.

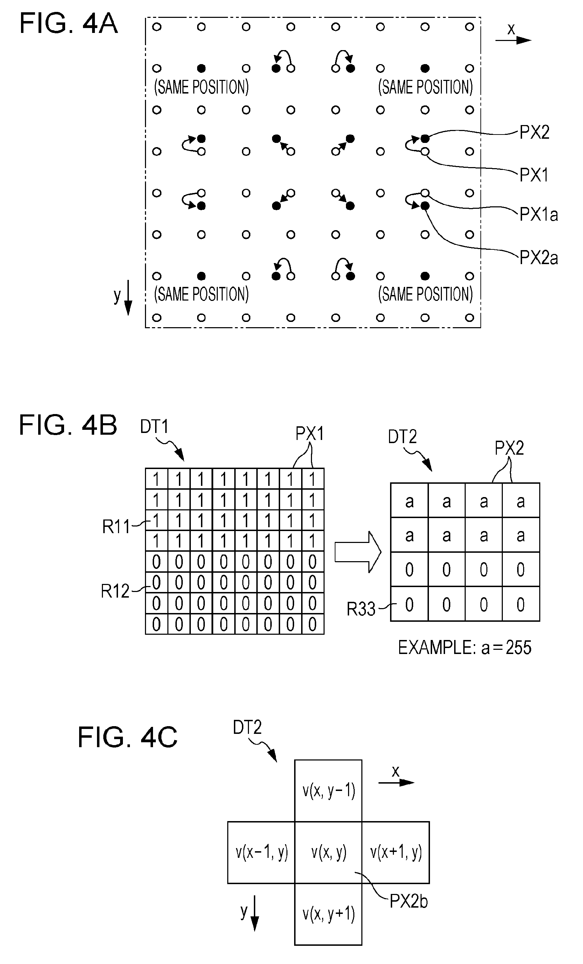

First, the grayscale data generation unit U1 acquires the CTP dot data DT1 and attached data of the dot data (S102). The dot data DT1 is, for example, binary data of horizontal 2400 dpi × vertical 2400 dpi, in which a grayscale value of 1 is stored in the pixels of the dot portion R11, and a grayscale value of 0 is stored in the pixels of the blank portion R12. Here, as illustrated in Fig. 4A, an x direction which is either the x direction or the y direction in which pixels PX1 of the dot data DT1 are arranged is also referred to as a "horizontal direction", and the other y direction is also referred to as a "vertical direction". In order to implement the present technology, the resolution of dot data may be resolutions other than 2400 dpi × 2400 dpi, and dot data may be ternary or more multi-value data. In order to perform color conversion by using the dot data DT1 and to print the proof 150, first, resolution conversion for matching a resolution of the color reproduction image 160 which is formed by the proof printer 100 is performed, and it is necessary to generate the input grayscale data DT2 which has multiple grayscales. For this reason, for example, a resolution of the dot data DT1, and the number of screen lines as necessary are acquired as the attached data. The number of screen lines indicates the number of lines per inch when linearly arranged dots are referred to as a line, and may be, for example, 133 lines/inch, or 175 lines/inch.

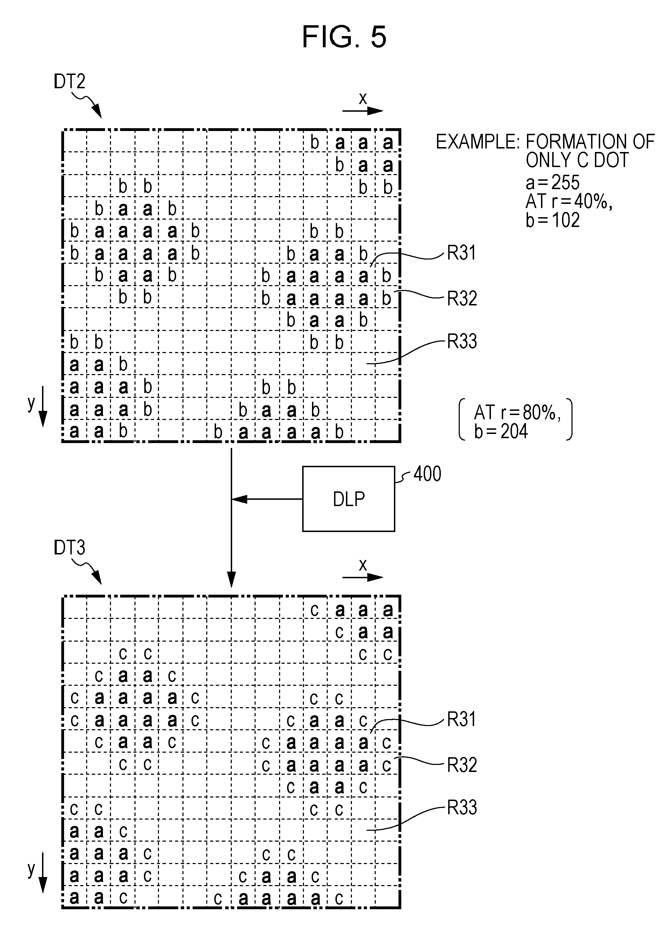

The present technology has a feature in which a grayscale value b (refer to Fig. 5) corresponding to the dot area ratio r is stored in the peripheral part R32 of the dot in the input grayscale data DT2. The grayscale value b corresponding to the dot area ratio r is assumed to be substantially proportional to the dot area ratio r in this specific example, but need not be substantially proportional to the dot area ratio r. In addition, regarding a correspondence relationship between the dot area ratio r and the grayscale value b, if the dot area ratios r are different from each other, a different grayscale value b is preferably used; if the grayscale values b are different from each other, a different dot area ratio r is preferably used; and a one-to-one correspondence relationship is particularly preferable.

If the dot area ratio r is included in the attached data, the grayscale data generation unit U1 may acquire the dot area ratio r from the attached data, but if the dot area ratio r is not included in the attached data, the grayscale data generation unit U1 calculates the dot area ratio r on the basis of the dot data DT1 (S104 of Fig. 1).

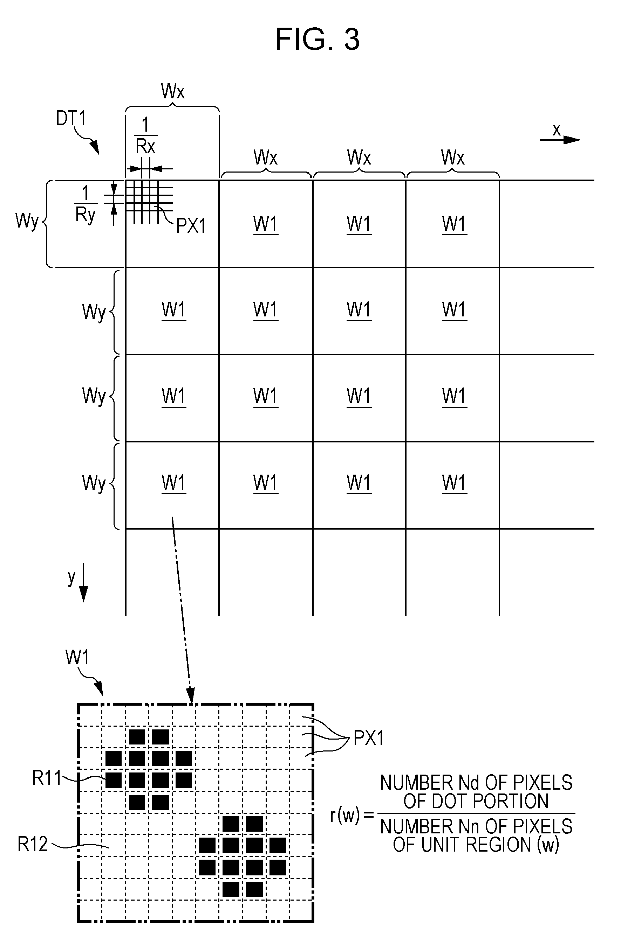

Fig. 3 schematically illustrates an example of calculating the dot area ratio r on the basis of the dot data DT1. First, a description will be made of an example in which the dot data DT1 is divided into respective unit regions W1 which do not overlap each other, and a dot area ratio r(w) is calculated for each unit region W1. Here, w indicates a variable for identifying each unit region. In Fig. 3, a resolution of the dot data DT1 in the x direction is denoted as Rx, a resolution of the dot data DT1 in the y axis direction is denoted as Ry, the number of pixels of the unit region W1 in the x direction is denoted as Wx, and the number of pixels of the unit region W1 is denoted as Wy. In a case where a resolution of the dot data DT1 is 2400 dpi × 2400 dpi, Rx is 2400 dpi, and Ry is 2400 dpi. The number of pixels Wx and Wy may be values which can allow an approximate value of a dot area ratio to be calculated, and may be the number of pixels each of which is in a distance about 1 mm wide or high at the position at which the dot structure pattern is hardly observed when printed matter is viewed at an observation distance of 30 cm. In addition, in order to prevent a low-resolution multi-grayscale process which will be described later from becoming complex, the number of pixels Wx may be set to be Nx (where Nx is an integer of 2 or greater) times larger than (1/Rx) and the number of pixels Wy may be set to Ny (where Ny is an integer of 2 or greater) times larger than (1/Ry). In a case where a resolution of the dot data DT1 is 2400 dpi, $2400/25.4 \cong 94.49$, and thus Wx and Wy may be set to 95 (pixels per millimeter). In this case, the unit region W1 is formed by horizontal 95 pixels × vertical 95 pixels.

If the number of pixels Wx and Wy are set, a dot area ratio r(w) can be calculated for each unit region W1. The dot area ratio r(w) is represented by, for example, a ratio of the number Nd of pixels of the dot portion R11 to the number Nn of all pixels. In a schematic example illustrated on the lower part of Fig. 3, since the number Nn of all pixels included in the unit region W1 is 10×10=100, and the number Nd of pixels of the dot portion R11 is 24, the dot area ratio r is 24/100.

In addition, the unit region W1 may be reduced, and pixels within a range (a dot area ratio calculation range) exceeding the unit region W1 may be referred to when the dot area ratio r(w) is calculated. Generally, a resolution of the dot structure is twice the number of screen lines, and thus the resolution of the dot structure is 175x2=350 dpi when the number of screen lines is 175 lines/inch. In this case, $2400/350 \cong 6.8$, and thus Wx and Wy may be set to 7. The dot area ratio calculation range may be 95 pixels × 95 pixels centering on the unit region W1 formed by 7 pixels × 7 pixels. In this case, a ratio Nd/Nn of the number Nd of pixels of the dot portion(s) R11 included in the dot area ratio calculation range to the number Nn of all pixels (95x95=9025) in the dot area ratio calculation range may be set as the dot area ratio r(w) for the unit region W1 formed by 7 pixels × 7 pixels. The dot area ratio calculation ratio is not limited to a rectangular shape, and may be a substantially circular shape (for example, a substantially circular shape with a diameter of 48 pixels) within a predetermined distance range from a central pixel of the unit region W1.

When the unit region W1 is set in the dot data DT1, pixels which partially overlap each other may be included in a plurality of unit regions W1. A shape of the unit region W1 is not limited to a rectangular shape, and may be a substantially circular shape.

The grayscale data generation unit U1 converts a resolution of the dot data DT1 into a resolution of the color reproduction image 160 formed by the proof printer 100, and performs a multi-grayscale process on the dot data DT1, thereby generating the input grayscale data DT2 (S106 of Fig. 1). A resolution of the color reproduction image 160 is not particularly limited, but may be horizontal 1440 dpi × vertical 1440 dpi, horizontal 720 dpi × vertical 720 dpi, or the like. In a case where a resolution of the color reproduction image is lower than a resolution of the dot data, the dot data DT1 is converted to have a low resolution. The number of grayscales of the input grayscale data DT2 is not particularly limited, but may be, for example, 256 grayscales.

Figs. 4A and 4B schematically illustrate an example in which the dot data DT1 is converted to have a low resolution according to a nearest neighbor method. In the figures, white circles indicate positions of the pixels PX1 forming the dot data DT1, and black circles indicate positions of the pixels PX2 which will form the input grayscale data DT2. Input grayscale data (DT2) illustrated in Figs. 4B and 4C is data in which a grayscale value corresponding to a dot area ratio has not yet been stored in the peripheral part R32 and is thus indicated by the reference sign included in parentheses. The nearest neighbor method is a pixel interpolation method in which a grayscale value of a dot data pixel (a pixel of the dot data DT1) PX1a nearest to a focused pixel PX2a which is generated for the input grayscale data DT2 is stored in the focused pixel PX2a. In Fig. 4A, movements of grayscale values from the dot data pixels PX1 to the interpolated pixels PX2 are indicated by arrows, and "the same positions" are illustrated in a case where positions of the pixels PX1 and PX2 before and after the interpolation are the same as each other.

In order to implement the present technology, dot data may be converted to have a high resolution in accordance with a color reproduction image having a high resolution. As a pixel interpolation method, the nearest neighbor method is preferably used, but, in order to implement the present technology, a resolution of dot data may be converted by using pixel interpolation methods such as a bilinear method in which a plurality of pixels near a focused pixel are referred to, or a bicubic method in which a larger number of pixels are referred to.

In a case where the grayscale values of the dot data pixels PX1 are merely stored in the interpolated pixels PX2, a grayscale value a illustrated in Fig. 4B becomes 1, and thus a high resolution is not obtained. Therefore, the grayscale value a (where a is an integer of 2 or greater) corresponding to a color of the dot portion R11 of the dot image 360 is stored in the interpolated pixels PX2 corresponding to the dot data pixels PX1 whose grayscale value is 1. The grayscale value of the dot data pixels PX1 being 1 indicates that there is a high probability that dots will be formed in the pixels of the color reproduction image 160. For this reason, the grayscale value a is a value indicating a certain high density. The grayscale value a may be the maximum grayscale value of 255, and may be a value (for example, a grayscale value corresponding to an ink usage amount of 90% to 99%) close to the maximum grayscale value.

The resolution conversion and the multi-grayscale process may be performed separately or simultaneously. In a case where the resolution conversion is performed and then the multi-grayscale process is performed, for example, a grayscale value of the nearest dot data pixels PX1 may be stored in all of the interpolated pixels PX2, and then the stored grayscale value of 1 may be converted into the grayscale value a. In a case where the multi-grayscale process is performed, and then the resolution conversion is performed, for example, the grayscale value a may be stored in the dot data pixels PX1 in which the grayscale value of 1 is stored, and then the grayscale value of the nearest dot data pixels PX1 may be stored in all of the interpolated pixels PX2. In a case where the resolution conversion and the multi-grayscale process are performed simultaneously, for example, in a case where a grayscale value of the dot data pixel PX1a nearest to the focused pixel PX2a is 1, the grayscale value a may be directly stored in the focused pixel PX2a.

The grayscale data generation unit U1 divides a dot portion included in the input grayscale data (DT2) in which a grayscale value corresponding to the dot area ratio has not yet been stored into the core part R31 and the peripheral part R32 (S108 of Fig. 1). The core part R31 illustrated in Fig. 1 is a portion surrounded by the peripheral part R32 of the dot portion. The peripheral part R32 of the dot may be detected by using various edge detection methods. In order to detect an edge, well-known edge detection filters such as a Sobel filter, a Prewitt filter, and a Roberts filter may be used.

The grayscale value a (where a≥2) is stored in the dot portion of the input grayscale data (DT2) illustrated in Fig. 4B, and the grayscale value of 0 is stored in a blank portion R33. Therefore, as illustrated in Fig. 4C, by referring to a grayscale value v(x,y) of the focused pixel PX2a and grayscale values v(x-1,y), v(x+1,y), v(x,y-1) and v(x,y+1) of four pixels which are adjacent to a focused pixel PX2b horizontally and vertically, it can be identified to which among the core part R31, the peripheral part R32, and the blank portion R33, the focused pixel PX2a belongs. First, in a case where v(x,y)=0, the focused pixel PX2a belongs to the blank portion R33. In a case where the grayscale values v(x,y), v(x-1,y), v(x+1,y), v(x,y-1) and v(x,y+1) are all a, the focused pixel PX2a belongs to the core part R31. In a case where v(x,y) is a, and at least one of grayscale values v(x-1,y), v(x+1,y), v(x,y-1), and v(x,y+1) is 0, the focused pixel PX2a belongs to the peripheral part R32.

The grayscale data generation unit U1 stores a grayscale value corresponding to the dot area ratio r(w) in pixels of the peripheral part R32 (S110 of Fig. 1). Fig. 5 exemplifies the input grayscale data DT2 in which a grayscale value b (where b is an integer of 1 or greater) corresponding to the dot area ratio r is stored in the peripheral part R32 in a case where only a C dot is formed. The grayscale value b may be a value which is proportional to the dot area ratio r, and may be a value which is not proportional to the dot area ratio r. Since the dot area ratio r(w) is obtained for each unit region W1, the grayscale value b may differ depending on the dot area ratio r(w). Fig. 5 illustrates that, in a case where the dot area ratio r is 40%, b=102 is stored in the peripheral part R32, and in a case where the dot area ratio r is 80%, b=204 is stored in the peripheral part R32.

Also in a case where only an M dot is formed, only a Y dot is formed, and only a K dot is formed, a grayscale value corresponding to the dot area ratio r(w) can be stored in the pixels of the peripheral part R32 in the same manner.

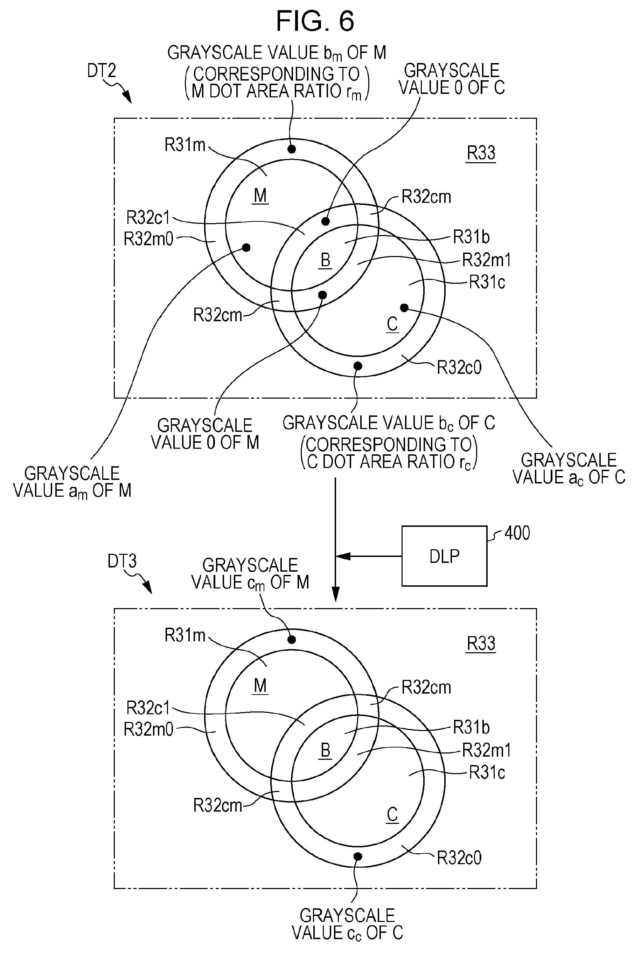

However, dots of different color materials may partially overlap each other in the dot image 360 as illustrated in Fig. 6. Fig. 6 schematically illustrates a state where a C dot and an M dot partially overlap each other. The portion where the C dot and the M dot partially overlap each other becomes a blue (B) region. A peripheral part of the C dot includes a portion R32c0 which does not overlap the M dot at all, a portion R32c1 which overlaps a core part of the single color of M, and two portions R32cm which overlap a peripheral part of the M dot. The peripheral part of the M dot includes a portion R32m0 which does not overlap the C dot at all, a portion R32m1 which overlaps a core part of the C dot, and two portions R32cm which overlap the peripheral part of the C dot. A grayscale value corresponding to a dot area ratio may be stored in the overlapping portions R32c0, R32cm and R32m0, and the grayscale value of 0 or the like may be stored therein. In the example illustrated in Fig. 6, a grayscale value $a_c$ of C is stored in the core parts (R31c, R32m1, and R31b) of the single color of C, and a grayscale value $a_m$ of M is stored in the core parts (R31m, R32c1, and R31b) of the single color of M. A grayscale value $b_c$ of C corresponding to a dot area ratio $r_c$ of C is stored in the portion R32c0 which does not overlap the M dot in the peripheral part of the C dot, and a grayscale value $b_m$ of M corresponding to a dot area ratio $r_m$ of M is stored in the portion R32m0 which does not overlap the C dot in the peripheral part of the M dot. A grayscale value of 0 of C is stored in the portion R32c1 which overlaps the core part of the single color of M in the peripheral part of the C dot, and a grayscale value of 0 of M is stored in the portion R32m1 which overlaps the core part of the single color of C in the peripheral part of the M dot. In addition, grayscale values $b_c$ and $b_m$ may be stored in the two portions R32cm which overlap the peripheral part of the single color of C and the peripheral part of the single color of M, and the grayscale value of 0 or another value may be stored in both CM.

Also in a case where dots of three or more colors overlap each other, grayscale values corresponding to the dot area ratios r can be stored in pixels of peripheral parts of the dots.

As described above, the grayscale data generation unit U1 generates the input grayscale data DT2 in which the grayscale value b corresponding to the dot area ratio r is stored in the peripheral part R32, and the grayscale value a corresponding to a color of the dot portion R11 of the dot image 360 is stored in the core part R31, on the basis of the dot data DT1. The grayscale value a indicates each of the usage amounts Dc, Dm, Dy, and Dk of the first color materials illustrated in Fig. 1. If the dot is divided into the core part R31 and the peripheral part R32, in a process to be described later, a color of the core part R31 can approximately match a color of the dot image 360 formed by the printer body 300, and a color of the peripheral part R32 can match the color of the dot image 360 in a slightly deviated manner.

The color conversion unit U2 performs the first color conversion (S114 of Fig. 1) on the grayscale value of the core part R31 included in the input grayscale data DT2, and performs the second color conversion (steps S112 to S114 of Fig. 1) which is different from the first color conversion on the grayscale value of the peripheral part R32 included in the input grayscale data DT2. The output grayscale data DT4 is generated from the input grayscale data DT2 through the first and second color conversion. First, a description will be made of the first color conversion performed on the core part R31.

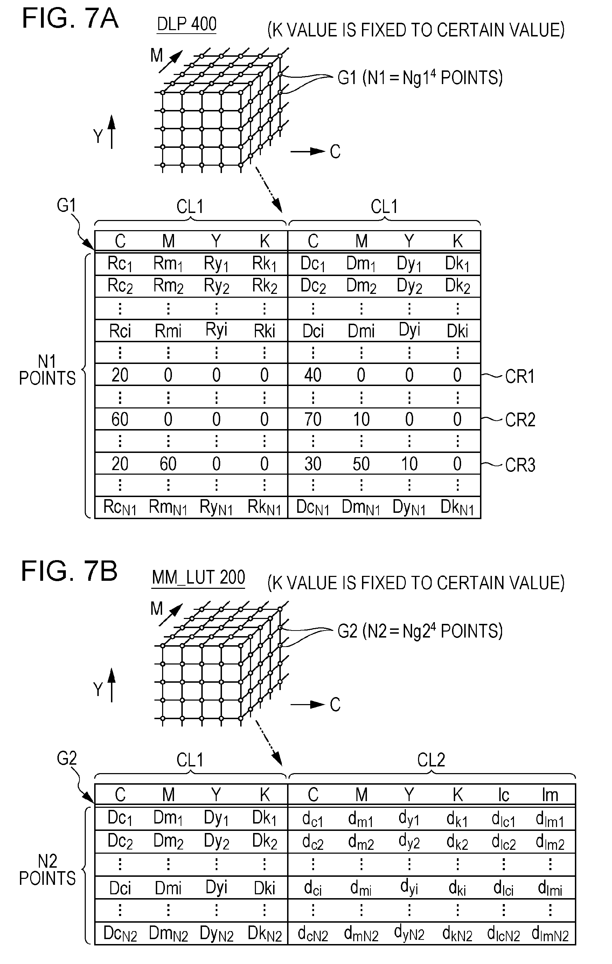

The grayscale value a indicating the usage amounts Dc, Dm, Dy, and Dk of the first color materials is stored in each pixel of the core part R31 forming the input grayscale data DT2. The color conversion unit U2 performs a color part plate process on a plurality of light sources according to the MM_LUT 200 (refer to Fig. 7B) for realizing favorable metameric matching between the dot image 360 and the color reproduction image 160. The color part plate corresponds to the first color conversion.

Input values of the MM_LUT 200 are four-dimensional values of CMYK and thus cannot be illustrated. Therefore, the LUT 200 is schematically illustrated in a three-dimensional form in which a certain single-dimension is fixed to one point, and, in Fig. 7B, a K value is fixed to a certain value, and the LUT 200 is represented in a three-dimensional space of CMY. For example, if a lattice point of Ng2 stages (where Ng2 is an integer of 2 or greater) is provided for each of the usage amounts of CMYK, the number of lattice points is $Ng2^4$. In a case where Ng2=17, the number of lattice points is $N2=17^4=83521$. Since a usage amount of K has Ng2 stages, Ng2 CMY three-dimensional color spaces as illustrated in Fig. 7B are present.

The lattice point is a general term indicating an input point defined in an LUT, and is not particularly limited in arrangement as long as the lattice point corresponds to coordinates of an input color space. Therefore, a plurality of lattice points may not only be uniformly arranged in the input color space, but may also be nonuniformly arranged as long as the lattice points of CMYK are located at different positions in the input color space.

A coordinate (position) of a lattice point G2 in the CMYK color space indicates the usage amounts Dc, Dm, Dy, and Dk of the first color materials CL1. Grayscale values indicating lattice point ink amounts (the respective usage amounts of the second color materials CL2) $d_c$, $d_m$, dy, $d_k$, $d_{lc}$, and $d_{lm}$ are stored in each lattice point G2. Fig. 7B illustrates grayscale values Dci, Dmi, Dyi, and Dki indicating the respective usage amounts of the first color materials CL1, and grayscale values $d_{ci}$, $d_{mi}$, $d_{yi}$, $d_{ki}$, $d_{lc}$, and $d_{lmi}$ indicating the respective usage amounts of the second color materials CL2, by using a variable i for identifying the lattice points G2. The LUT 200, for each lattice point G2, defines a correspondence relationship between usage amounts of the color materials CL1 having CMYK used to form the dot image 360 and usage amounts of the color materials CL2 having CMYKlclm used to form the color reproduction image 160. A method of generating the LUT 200 will be described later.

As mentioned above, in the first color conversion, the color conversion unit U2 converts the grayscale value a of the core part R31 according to the correspondence relationship defined in the LUT 200. Since the grayscale value a is the same value regardless of a dot area ratio, a grayscale value of the core part R31 after the first color conversion is performed is the same value.

Next, a description will be made of the second color conversion performed on the peripheral part R32. As illustrated in Fig. 5, the grayscale value b corresponding to the dot area ratio r is stored in each pixel of the peripheral part R32 included in the input grayscale data DT2, and thus color conversion performed by referring to the LUT 200 cannot be performed in this state. Therefore, the color conversion unit U2 converts the grayscale value b corresponding to the dot area ratio r into grayscale values c indicating usage amounts of the first color materials CL1 in the LUT 200 (S112), and converts the converted values c to grayscale values indicating usage amounts of the second color materials CL2 according to the LUT 200 (S114). Although only a grayscale value of C is illustrated in Fig. 5 for better understanding, grayscale values of MYK may be generated if the color materials CL2 having MYK are preferably used in order to match color tones between the dot image 360 and the color reproduction image 160.

The grayscale value b corresponding to the dot area ratio r is stored in each pixel of the peripheral part R32 forming the input grayscale data DT2. The color conversion unit U2 performs DLP conversion according to the DLP 400 (refer to Fig. 7A) for converting the grayscale value corresponding to the dot area ratio r into grayscale values indicating usage amounts of the first color materials CL1 in the LUT 200 (S112).

Input values of the DLP 400 are four-dimensional values of CMYK and thus cannot be illustrated either. Therefore, the DLP 400 is schematically illustrated in a three-dimensional form in which a certain one-dimension is fixed to one point, and, in Fig. 7A, a K value is fixed to a certain value, and the DLP 400 is represented in a three-dimensional space of CMY. For example, if a lattice point of Ng1 stages (where Ng1 is an integer of 2 or greater) is provided for each of the usage amounts of CMYK, the number N1 of lattice points is $Ng1^4$.

Coordinates (positions) of lattice points G1 in the CMYK color space respectively indicate Rci, Rmi, Ryi, and Rki respectively corresponding to the dot area ratios r of CMYK. The variable i here is a variable for identifying the lattice points G1. The coordinates of the lattice point G1 may or may not match the coordinates of the lattice point G2 in the LUT 200. The number N1 of lattice points may or may not be the same as the number N2 of lattice points in the LUT 200. Grayscale values Dci, Dmi, Dyi, and Dki respectively indicating lattice point color material amounts (the respective usage amounts of the first color materials CL1) Dc, Dm, Dy, and Dk are stored in the lattice points G1. The DLP 400 defines the second correspondence relationship between a grayscale value corresponding to the dot area ratio r and a lattice point address (the usage amount of each of the first color materials CL1) in the LUT 200 for each lattice point G1.

The DLP 400 illustrated in Fig. 7A also shows schematic grayscale values for better understanding. The numerical values illustrated in Fig. 7A are only an example, and various grayscale values may be stored in the DLP depending on the kind of color material or printing medium. In Fig. 7A, for example, in a correspondence relationship CR1, a grayscale value corresponding to the dot area ratio $r_c$ of C is 20, and dot area ratios of MYK are all 0%. In a case where MYK dots are not formed, and a dot area ratio of C is $r_c$, grayscale values indicating color material usage amounts (Dc, Dm, Dy, and Dk) for color tone matching between the dot image 360 and the color reproduction image 160 are (40, 0, 0, and 0). Therefore, the grayscale values (20, 0, 0, and 0) stored in the pixel of the peripheral part R32 included in the input grayscale data DT2 are converted into grayscale values (40, 0, 0, and 0).

In a correspondence relationship CR2, a grayscale value corresponding to the dot area ratio $r_c$ of C is 60, and dot area ratios of MYK are all 0%. In a case where MYK dots are not formed, and a dot area ratio of C is $r_c$, grayscale values indicating color material usage amounts (Dc, Dm, Dy, and Dk) for color tone matching between both of the images 360 and 160 are (70, 10, 0, and 0). This indicates that a slight amount of the color material CL2 of M is required to be added in order to match a color tone of the color reproduction image 160 with a color tone of the dot image 360 including only the C dot having the dot area ratio $r_c$. Therefore, the grayscale values (60, 0, 0, and 0) stored in the pixel of the peripheral part R32 included in the input grayscale data DT2 are converted into grayscale values (70, 10, 0, and 0).

In a correspondence relationship CR3, a grayscale value corresponding to the dot area ratios $r_c$ and $r_m$ of CM are respectively 20 and 60, and dot area ratios of YK are all 0%. In a case where YK dots are not formed, and dot area ratios of CM are respectively $r_c$ and $r_m$, grayscale values indicating color material usage amounts (Dc, Dm, Dy, and Dk) for color tone matching between both of the images 360 and 160 are (30, 50, 10, and 0). This indicates that a slight amount of the color material CL2 of Y is required to be added in order to match a color tone of the color reproduction image 160 with a color tone of the dot image 360 including the CM dots having the dot area ratios $r_c$ and $r_m$. Therefore, the grayscale values (20, 60, 0, and 0) stored in the pixel of the peripheral part R32 included in the input grayscale data DT2 are converted into grayscale values (30, 50, 10, and 0).

A method of generating the DLP 400 will be described later.

As mentioned above, in the DLP conversion, the color conversion unit U2 converts the input grayscale data DT2 into the intermediate grayscale data DT3 according to the second correspondence relationship defined in the DLP 400. Consequently, the grayscale value b of the peripheral part R32 is converted into the grayscale value c. The grayscale value b differs depending on the dot area ratio r, and thus the grayscale value c of the peripheral part R32 having undergone the DLP conversion may have a different value depending on the dot area ratio r.

Since input values of the DLP 400 are four-dimensional values of CMYK, as illustrated in Fig. 6, the DLP conversion can also be performed in a case where dots having different color materials partially overlap each other in the same manner. For example, regarding the portion R32c0 which does not overlap the M dot, by referring to the DLP 400, grayscale values thereof can be converted into grayscale values indicating the usage amounts Dc, Dm, Dy, and Dk of the first color materials CL1 corresponding to a grayscale value $b_c$ of C and a grayscale value of 0 of M. In a case where grayscale values $b_c$ and $b_m$ are stored in the portion R32cm where the peripheral part of the single color of C and the peripheral part of the single color of M overlap each other, the grayscale values are converted into grayscale values indicating the usage amounts Dc, Dm, Dy, and Dk of the first color materials CL1 corresponding to the grayscale values $b_c$ and $b_m$ in relation to the portion R32cm.

The color conversion unit U2 converts the grayscale values c of the peripheral part R32 into grayscale values indicating the usage amounts $d_c$, $d_m$, dy, $d_k$, $d_{lc}$, and $d_{lm}$ of the second color materials CL2 according to the MM_LUT 200 for realizing favorable metameric matching between the dot image 360 and the color reproduction image 160 under a plurality of light sources (S114).

As mentioned above, in the second color conversion, the color conversion unit U2 converts the grayscale values b of the peripheral part R32 into the grayscale values c according to the second correspondence relationship defined in the DLP 400, and converts the grayscale values c according to the correspondence relationship defined in the LUT 200. The DLP conversion and the color part plate correspond to the second color conversion. Since each of the grayscale values c differs depending on a dot area ratio, a grayscale value of the peripheral part R32 having undergone the second color conversion has a different value depending on the dot area ratio r.

The halftone processing unit U3 performs a halftone process on the grayscale values indicating the usage amounts $d_c$, $d_m$, dy, $d_k$, $d_{lc}$, and $d_{lm}$ of the second color materials CL2 stored in the pixels of the core part R31 and the peripheral part R32, and generates multi-value data describing a dot formation situation (S116). A halftone result on the core part R31 and a halftone result on the peripheral part R32 are combined into common multi-value data DT5 (S118). The halftone processing unit U3 outputs the generated multi-value data DT5 to the proof printer 100. The proof printer 100 having received the multi-value data DT5 ejects CMYKlclm ink droplets according to the multi-value data DT5, and forms ink dots on the printing medium M2 (S120). In the above-described manner, it is possible to obtain the dot proof 150 in which the color reproduction image 160 is formed on the printing medium M2.

*(3) Host Apparatus Including Image Processing Apparatus, and Specific Examples of Process therein*

Fig. 8 exemplifies a configuration of the host apparatus H2 including the image processing apparatus of the present technology. In the host apparatus H2, a central processing unit (CPU) 11, a random access memory (RAM) 12, a read only memory (ROM) 13, a hard disk drive (HDD) 14, a general purpose interface (GIF) 15, a video interface (VIF) 16, an input interface (IIF) 17, and the like are connected to a bus 18, and can transmit and receive information to and from each other. The HDD 14 stores program data 14a and the like for executing various programs including an operating system (OS) and an image processing program P1. The HDD 14 also stores the DLP 400, the LUT 200, and the like. The HDD 14 and the RAM 12 constitute the storage section U21. The CPU 11 reads the program data 14a to the RAM 12 as appropriate, and controls the entire host apparatus according to the program data 14a. The image processing program P1 causes the host apparatus H2 to realize functions corresponding to the respective units U1 to U3 of the image processing apparatus, and thus the host apparatus H2 functions as the image processing apparatus.

The GIF 15 is connected to a printer 20 which is an image output apparatus, an image input apparatus 30 which is a colorimeter or a scanner, and the like. The GIF 15 may employ a universal serial bus (USB) or the like. The printer 20 may or may not be the proof printer 100. The VIF 16 is connected to a display 40 which is an image output apparatus. The IIF 17 is connected to a keyboard 50a which is an operation input device 50, a pointing device 50b which is the same operation input device 50, and the like. As the pointing device 50b, a mouse or the like may be used.

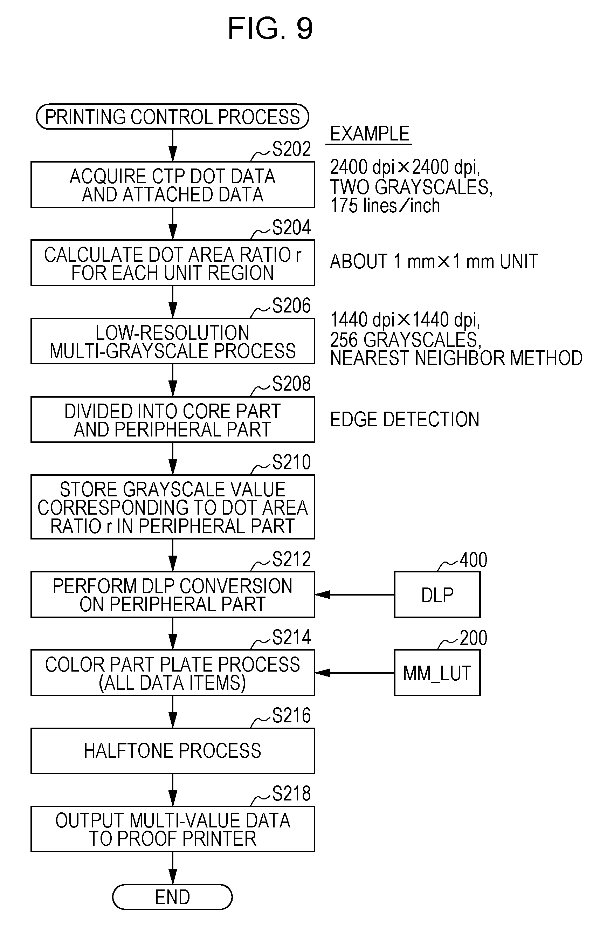

Fig. 9 illustrates an example of a dot proof printing control process performed in the host apparatus H2. In this process, steps S202 to S210 correspond to the grayscale data generation unit U1 and the grayscale data generation function, steps S212 to S214 correspond to the color conversion unit U2 and the color conversion function, and steps S216 to S218 correspond to the halftone processing unit U3 and the halftone process function. Hereinafter, with reference to Figs. 1 to 8, a printing control process will be described.

If the printing control process is started, the host apparatus H2 acquires the CTP dot data DT1 and attached data of the dot data of a target for forming a dot proof on the basis of an instruction from a user (S202). In a case where the dot data DT1 is binary data having 2400 dpi × 2400 dpi, and the number of screen lines is 175 lines/inch, a resolution Rx=2400 in the x direction, a resolution Ry=2400 in the y direction, and the number of screen lines, 175 lines/inch, as necessary, are acquired as the attached data. In S204, as illustrated in Fig. 3, the dot area ratio r(w) is calculated for each unit region W1 on the basis of the dot data DT1. In a case where Rx=Ry=2400 dpi, for example, a ratio Nd/Nn of the number Nd of pixels of the dot portion R11 to the number Nn of pixels for each unit region W1 having, for example, Wx=Wy=95 pixels, is calculated as the dot area ratio r(w). In addition, in a case where Rx=Ry=2400 dpi, and the number of screen lines is 175 lines/inch, the dot area ratio r(w) in a dot area ratio calculation range of 95 pixels × 95 pixels may be calculated for each unit region W1 having, for example, Wx=Wy=7 pixels.

In S206, a low-resolution multi-grayscale process is performed. This process is a process in which the resolution of the dot data DT1 is changed (reduced) to a resolution (for example, 1440 dpi × 1440 dpi) of the color reproduction image 160 formed by the proof printer 100, and a multi-grayscale process (for example, generation of 256 grayscales) is performed on the dot data DT1, thereby generating the input grayscale data DT2. The reduction in a resolution is performed by performing resolution conversion on the dot data DT1 according to a pixel interpolation method such as the nearest neighbor method as illustrated in Figs. 4A and 4B, and the multi-grayscale process is performed by storing the grayscale value a indicating a high density in the pixels of the dot portion. In S208, the dot portion included in the input grayscale data (DT2) in which the grayscale value b corresponding to the dot area ratio r has not yet been stored is divided into the core part R31 and the peripheral part R32. For example, in a case where a grayscale value v(x,y) of the focused pixel PX2b illustrated in Fig. 4C is 0, it is determined that the focused pixel PX2a belongs to the blank portion R33. In a case where the grayscale values v(x,y), v(x-1,y), v(x+1,y), v(x,y-1), and v(x,y+1) are all a, it is determined that the focused pixel PX2a belongs to the core part R31. In a case where v(x,y) is a, and at least one of v(x-1,y), v(x+1,y), v(x,y-1), and v(x,y+1) is 0, it is determined that the focused pixel PX2a belongs to the peripheral part R32.

In S210, the grayscale value b corresponding to the dot area ratio r(w) is stored in the pixels of the peripheral part R32. Consequently, as illustrated in Fig. 5, the input grayscale data DT2 is generated in which the grayscale value b corresponding to the dot area ratio r is stored in the peripheral part R32, and the grayscale value a corresponding to a color of the dot portion R11 of the dot image 360 is stored in the core part R31.

Then, the host apparatus H2 DLP-converts the input grayscale data DT2 into the intermediate grayscale data DT3 by referring to the DLP 400 (S212). For example, as illustrated in Fig. 5, the grayscale value b stored in the pixels of the peripheral part R32 included in the input grayscale data DT2 is converted into the grayscale value c indicating each of the usage amounts Dc, Dm, Dy, and Dk of the first color materials CL1 in the MM_LUT 200. As illustrated in Fig. 7A, the DLP 400 is a four-dimensional look-up table in which grayscale values Rci, Rmi, Ryi, and Rki corresponding to the dot area ratios r are correlated with grayscale values Dci, Dmi, Dyi, and Dki indicating the usage amounts of the first color materials CL1 in the MM_LUT 200. Therefore, in relation to each pixel of the peripheral part R32, grayscale values of CMYK corresponding to the dot area ratios r(w) are converted into grayscale values of CMYK indicating the usage amounts of the first color materials CL1 in the LUT 200. In addition, in a case where there are no input points of the DLP 400 matching input grayscale values of CMYK corresponding to the dot area ratios r, output grayscale values corresponding to the input grayscale values of CMYK may be interpolated by using the grayscale values Dci, Dmi, Dyi, and Dki indicating color material usage amounts corresponding to each of a plurality of input points which are close to the input grayscale values of CMYK in the CMYK color space.

In S214, a color part plate process is performed in which the intermediate grayscale data DT3 is converted into the output grayscale data DT4 by referring to the MM_LUT 200. In this process, division into the core part R31 and the peripheral part R32 is not necessary, and the same process can be performed on all pixels of the intermediate grayscale data DT3, including the blank portion R33. In relation to the pixel of the core part R31, grayscale values (the grayscale values indicating color material usage amounts Dc, Dm, Dy, and Dk) corresponding to a color of the dot portion R11 of the dot image 360 are converted into grayscale values indicating usage amounts $d_c$, $d_m$, dy, $d_k$, $d_{lc}$, and $d_{lm}$ of the second color materials CL2 according to the LUT 200. In relation to the pixel of the peripheral part R32, the grayscale values having undergone the DLP conversion, indicating the usage amounts Dc, Dm, Dy, and Dk of the first color materials CL1 in the LUT 200, are converted into grayscale values indicating usage amounts $d_c$, $d_m$, dy, $d_k$, $d_{lc}$, and $d_{lm}$ of the second color materials CL2 according to the LUT 200. In the relation to the pixel of the blank portion R33, a grayscale value of 0 is converted into grayscale values indicating usage amounts $d_c$, $d_m$, dy, $d_k$, $d_{lc}$, and $d_{lm}$ of the second color materials CL2 according to the LUT 200. The obtained output grayscale data DT4 is data including color part plate processing results of the core part R31, the peripheral part R32, and the blank portion R33. In a case where there are no input points of the LUT 200 matching the color material usage amounts Dc, Dm, Dy, and Dk, grayscale values indicating $d_c$, $d_m$, dy, $d_k$, $d_{lc}$, and $d_{lm}$ corresponding to Dc, Dm, Dy, and Dk may be interpolated by using color material usage amounts $d_c$, $d_m$, dy, $d_k$, $d_{lc}$, and $d_{lm}$ of CMYKlclm corresponding to each of a plurality of input points which are close to the color material usage amounts Dc, Dm, Dy, and Dk in the CMYK color space.

Then, the host apparatus H2 performs a halftone process on the grayscale values indicating the usage amounts $d_c$, $d_m$, dy, $d_k$, $d_{lc}$, and $d_{lm}$ of the second color materials CL2 stored in each pixel of the output grayscale data DT4 so as to generate the multi-value data DT5 indicating a dot formation situation (S216). Also in this process, division into the core part R31 and the peripheral part R32 is not necessary, and the same process can be performed on all pixels of the output grayscale data DT4, including the blank portion R33. Therefore, it is not necessary to perform the halftone result combining process (S118) as illustrated in Fig. 1. The host apparatus H2 outputs the generated multi-value data DT5 to the proof printer 100 (S218), and finishes the printing control process. The proof printer 100 having received the multi-value data DT5 ejects ink droplets having CMYKlclm according to the multi-value data DT5, and forms the color reproduction image 160 having a dot structure on the printing medium M2.

Through the above-described process, it is possible to change the ink usage amounts $d_c$, $d_m$, dy, $d_k$, $d_{lc}$, and $d_{lm}$ after the color part plate process is performed in the peripheral part R32 of the dot depending on the magnitude of the dot area ratio r. Consequently, it is possible to reproduce a difference in a color tone of the dot image 360 due to a difference in the dot area ratio r by using the ink usage amounts $d_c$, $d_m$, dy, $d_k$, $d_{lc}$, and $d_{lm}$ in the peripheral part R32. Therefore, according to the present technology, it is possible to improve color reproduction accuracy of a dot image.

*(4) Generation Example of MM_LUT*

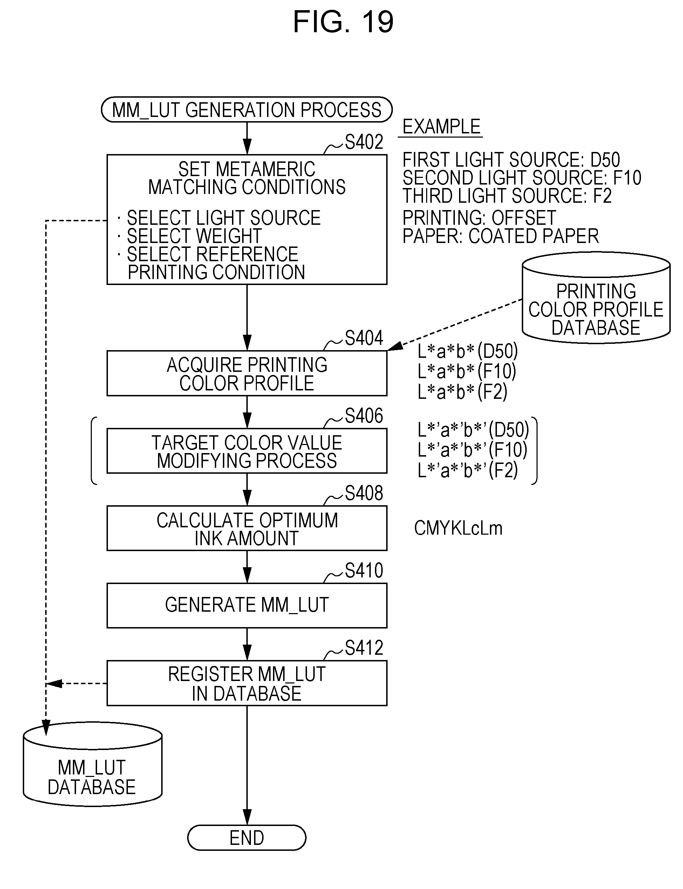

The MM_LUT 200 can be generated along with the DLP 400 by using the host apparatus H2. Fig. 8 illustrates the host apparatus H2 which includes the look-up table (LUT) generation unit U4 generating the MM_LUT 200, and the device link profile (DLP) generation unit U5 generating the DLP 400. At least one of the LUT generation unit U4 and the DLP generation unit U5 may be provided in a computer different from the host apparatus which performs the above-described printing control process. The LUT generation unit U4 includes a printing color profile generation section U41, a prediction section U42, and a predicted usage amount correlation section U43, and performs an MM_LUT generation process illustrated in Fig. 19.

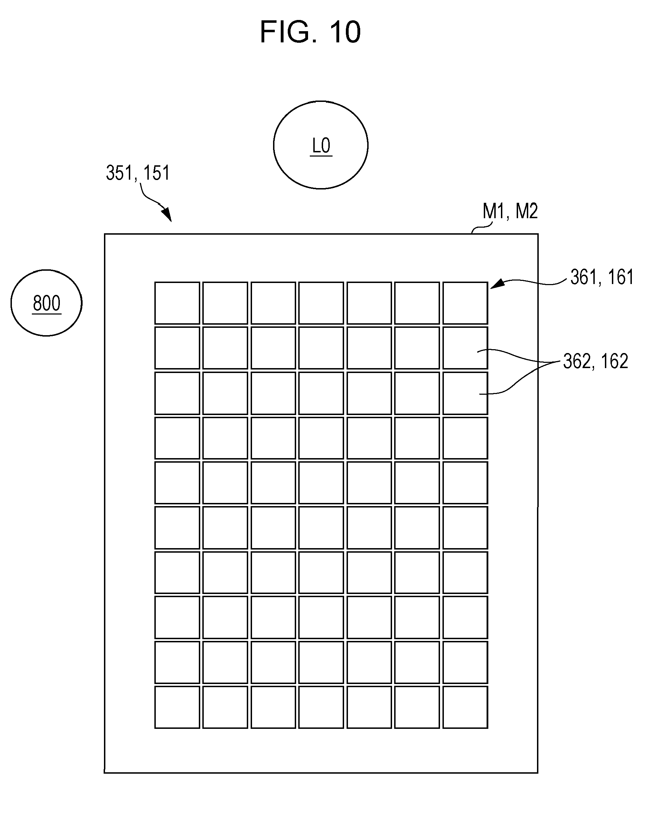

Fig. 10 schematically illustrates a state in which a color of each patch 362 or 162 of dot printed matter 351 or 151 of a color chart 361 or 161 is measured with a colorimeter (colorimetric apparatus) 800. The dot printed matter 351 is printed matter in which the color chart 361 is formed on the printing medium M1 by the printer body 300, and the dot printed matter 151 is printed matter in which the color chart 161 is formed on the printing medium M2 by the proof printer 100. Both pieces of the dot printed matter 351 and 151 are collectively illustrated in Fig. 10 since the patches 362 and 162 are disposed in the same manner. The patch is also referred to as a color chip, and indicates a colorimetric unit region in a colorimeter. The patches 362 and 162 illustrated in Fig. 10 are arranged in a two-dimensional configuration in the color charts 361 and 161. The dot printed matter 351 can be formed by outputting chart data for forming the color chart 361 to the printer body 300 from the host apparatus H1 in the printing system SY2 illustrated in Fig. 2. The chart data is data associated with the usage amounts Dc, Dm, Dy, and Dk of the first color materials CL1 for each patch 362, and may employ binary data having the same resolution as that of the CTP dot data DT1. When the MM_LUT 200 is generated, the dot printed matter 351 formed by the printer body 300 is used.

In the printer body 300 and the proof printer 100, the color materials CL1 and CL2 to be used are different from each other, and thus the printing media M1 and M2 to be used are also different from each other. In order to reduce a difference in a color tone due to differences in a color material and a printing medium as much as possible under a plurality of light sources, colors of the dot printed matter 351 are measured, usage amounts of the second color materials CL2 are predicted, and the MM_LUT 200 is generated as a result of the predicted color material usage amounts being correlated with usage amounts of the first color materials CL1.

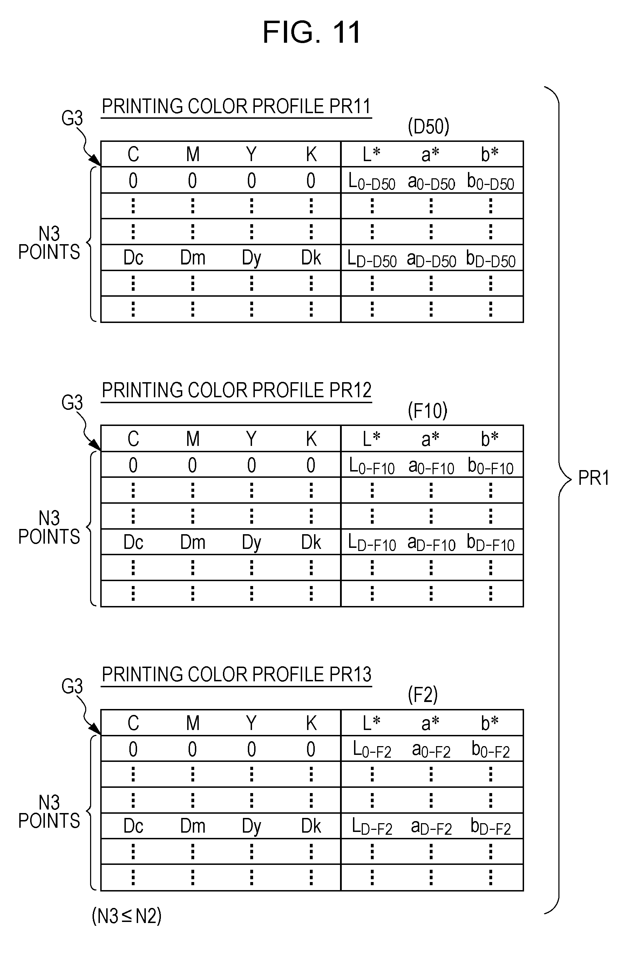

The printing color profile generation section U41 generates a printing color profile PR1 (refer to Fig. 11) in which the usage amounts Dc, Dm, Dy, and Dk of the first color materials CL1 is correlated with target color values (for example, $L^*a^*b^*$ values) based on a color measurement result for each observation light source. The prediction section U42 predicts usage amounts $d_c$, $d_m$, dy, $d_k$, $d_{lc}$, and $d_{lm}$ of the second color materials CL2 so that color values (for example, $L^*a^*b^*$ values) of the second color materials CL2 formed on the color reproduction image 160 are close to the target color values for each observation light source on the basis of an evaluation value I (which will be described later) for evaluating proximity to the target color values correlated with the usage amounts of the first color materials CL1. The predicted usage amount correlation section U43 correlates the usage amounts of the first color materials CL1 with the predicted usage amounts of the second color materials CL2 so as to generate the MM_LUT 200.

Fig. 11 schematically exemplifies structures of printing color profiles PR11 to PR13 for respective observation light sources. The reference sign PR1 is used when the respective printing color profiles PR11 to PR13 are collectively referred to. The printing color profile PR1 defines correspondence relationships between the usage amounts Dc, Dm, Dy, and Dk of the first color materials CL1 and target color values ($l_{Dj}$, $a_{Dj}$, and $b_{Dj}$ illustrated in Fig. 13) of the first color materials CL1 having the usage amounts Dc, Dm, Dy, and Dk, formed on the dot printed matter 350 under an observation light source, with respect to N3 lattice points G3 for each observation light source. The number N3 of lattice points G3 may be the same as the number N2 of lattice points of the LUT 200 illustrated in Fig. 7B, and may be smaller than N2. As the target color values defined in the printing color profile PR1, color values of a device-independent color space (apparatus-independent color space) or a uniform color space are preferably used, but color values of a device-dependent color space (apparatus-dependent color space) or color spaces other than a uniform color space may be used. A device-independent uniform color space may be not only an International Commission on Illumination (CIE) L*a*b* color space but also a CIE L*u*v* color space. L* of the $L^*a^*b^*$ color space represents brightness, and a* and b* represent chromaticity indicating a color and saturation.

In a printing color profile PR11 illustrated in Fig. 11, the usage amounts Dc, Dm, Dy, and Dk of the first color materials CL1 are correlated with target color values $L_{D}\text{-}D50$, $a_{D}\text{-}D50$, and $b_{D}\text{-}D50$ in a condition of the D50 light source L1 illustrated in Fig. 2. In a printing color profile PR12 illustrated in Fig. 11, the color material usage amounts Dc, Dm, Dy, and Dk are correlated with target color values $L_{D}\text{-}F10$, $a_{D}\text{-}F10$, and $b_{D}\text{-}F10$ in a condition of the F10 light source L2 illustrated in Fig. 2. In a printing color profile PR13 illustrated in Fig. 11, the color material usage amounts Dc, Dm, Dy, and Dk are correlated with target color values $L_{D}\text{-}F2$, $a_{D}\text{-}F2$, and $b_{D}\text{-}F2$ in a condition of the F2 light source L3 illustrated in Fig. 2.

The printing color profile PR1 exemplified as the printing color profiles PR11 to PR13 may be created, for example, by measuring a color of the color chart 361 formed by the printer body 300 and by correlating the color material usage amounts Dc, Dm, Dy, and Dk with colorimetric values for each patch 362. Since the chart data for forming the color chart 361 is associated with the color material usage amounts Dc, Dm, Dy, and Dk, the colorimetric values can be correlated with the color material usage amounts as target color values $L_{Dj}$, $a_{Dj}$ and $b_{Dj}$. For example, the printing color profile PR11 may be created by correlating the colorimetric values $L_{D}\text{-}D50$, $a_{D}\text{-}D50$, and $b_{D}\text{-}D50$ of each patch 362 with the color material usage amounts Dc, Dm, Dy, and Dk as target color values in the condition of the D50 light source L1. The printing color profile PR12 may be created by correlating the colorimetric values $L_{D-F10}$, $a_{D-F10}$, and $b_{D-F10}$ of each patch 362 with the color material usage amounts Dc, Dm, Dy, and Dk as target color values in the condition of the F10 light source L2. The printing color profile PR13 may also be created in the same manner. The created printing color profile PR1 is registered in a printing color profile database illustrated in Fig. 19.

When the MM_LUT generation process illustrated in Fig. 19 is started, the LUT generation unit U4 first displays a setting screen (not illustrated) and receives metameric matching condition settings (S402). The LUT generation unit U4 receives operations performed on selection columns provided on the setting screen, such as a selection column of the kind of printer body 300, a selection column of the kind of printing medium M1, a selection column of the kind of observation light source L0, and a selection column of target accuracy of observation light source L0, and stores selected items from the selection columns. For example, in a case where the D50 light source L1, the F10 light source L2, and the F2 light source L3 illustrated in Fig. 2 are selected as the observation light sources L0, information pieces indicating the light sources L1 to L3 are stored. In S404, the printing color profile PR1 is acquired from the printing color profile database for each selected observation light source. If the information pieces indicating the light sources L1 to L3 illustrated in Fig. 2 are stored, the printing color profiles PR11 to PR13 illustrated in Fig. 11 are acquired.

Fundamentally, the target color values $L_{Dj}$, $a_{Dj}$, and $b_{Dj}$ are stored in the acquired printing color profile PR1. In Fig. 19, "L*a*b*(D50)", "L*a*b*(F10)", and "L*a*b*(F2)" are illustrated as the target color values. On the other hand, there are cases where a certain user may desire a color reproduction target different from that in other regions to be set in some regions, such as a skin color region or a gray region. Therefore, with respect to some regions of the CMYK color space, the target color values $L_{Dj}$, $a_{Dj}$, and $b_{Dj}$ may be modified (S406). In Fig. 19, modified target color values are illustrated by "L*'a*'b*'(D50)", "L*'a*'b*'(F10)", and "L*'a*'b*'(F2)".

The LUT generation unit U4 may calculate ink amounts for simultaneously reproducing the target color values of each light source, set by a user, by using an optimum ink amount search method (optimization algorithm) (S408). The prediction section U42 predicts usage amounts of the color materials CL2 having CMYKlclm so that color values of the color materials CL2 having CMYKlclm, formed on the color reproduction image 160 are close to the target color values $L_{Dj}$, $a_{Dj}$, and $b_{Dj}$ for each observation light source, on the basis of the evaluation value I for evaluating proximity to the target color values $L_{Dj}$, $a_{Dj}$, and $b_{Dj}$ defined in the light source-based printing color profile PR1 for a plurality of light sources.

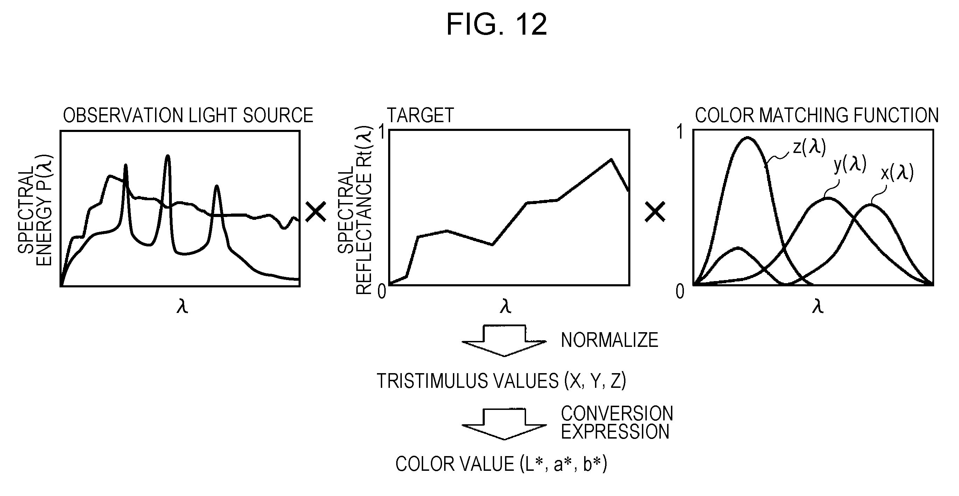

Fig. 12 schematically illustrates a state in which color values are obtained under a plurality of observation light sources by using a target (patch) having certain spectral reflectance. The spectral reflectance $R_t(\lambda)$ of the target typically has a nonuniform distribution in the entire visible wavelength region. The respective light sources have different distributions of spectral energy $P(\lambda)$. Spectral energy of reflected light with each wavelength when the target is irradiated by the light source is a value obtained by multiplying the target spectral reflectance $R_t(\lambda)$ and the spectral energy $P(\lambda)$ for each wavelength. In addition, color matching functions $x(\lambda)$, $y(\lambda)$ and $z(\lambda)$ corresponding to human spectral sensitivity characteristics are subject to convolutional integration with respect to a spectrum of spectral energy of reflected light, results thereof are normalized with a coefficient k, and thus tristimulus values X, Y and Z are obtained.

$$X = k \int P(\lambda) R_t(\lambda) x(\lambda) d\lambda$$
$$Y = k \int P(\lambda) R_t(\lambda) y(\lambda) d\lambda \qquad \cdots (1)$$
$$Z = k \int P(\lambda) R_t(\lambda) z(\lambda) d\lambda$$

The tristimulus values X, Y and Z are converted according to a predetermined conversion expression and thus color values $L^*a^*b^*$ are obtained.

As illustrated in Fig. 12, spectra of the spectral energy $P(\lambda)$ are different from each other for each light source, and thus target color values which are finally obtained are different from each other depending on light sources.

Fig. 13 schematically exemplifies a flow of a process of an optimum ink amount calculation module group used to calculate an ink amount set $\phi$ which causes the same colors as the target color values $L_{Dj}$, $a_{Dj}$, and $b_{Dj}$. In a case where the second color materials CL2 are color materials having CMYKlclm, the ink amount set $\phi$ indicates a combination of the usage amounts $d_c$, $d_m$, $d_y$, $d_k$, $d_{lc}$, and $d_{lm}$ of ejected CMYKlclm ink.

The optimum ink amount calculation module group (the prediction section U42) includes an ink amount set calculation module (image color matching (ICM)) P3a1, a spectral reflectance prediction module (RPM) P3a2, a color calculation module (CCM) P3a3, and an evaluation value calculation module (ECM) P3a4.

The ink amount set calculation module (image color matching (ICM)) P3a1 selects one lattice point G3 from the four-dimensional printing color profile PR1 whose input values are color material usage amounts of CMYK, and acquires target color values $L_{Dj}$, $a_{Dj}$, and $b_{Dj}$ correlated with the lattice point G3. This point is notably different from that in a printing system, disclosed in JP-A-2009-200820, which outputs an image having RGB as input values.

The spectral reflectance prediction module (RPM) P3a2 predicts spectral reflectance $R(\lambda)$ obtained when ink is ejected onto the printing medium M2 such as printing paper by the proof printer 100, as predicted spectral reflectance $R_s(\lambda)$, on the basis of an ink amount set $\phi$ when the ink amount set $\phi$, specifically, the ink usage amounts $d_c$, $d_m$, dy, $d_k$, $d_{lc}$, and $d_{lm}$ is input from the ICM P3a1. If the ink amount set $\phi$ is designated, a formation state of each ink dot on the printing medium M2 can be predicted, and thus the RPM P3a2 can calculate the unique predicted spectral reflectance $R_s(\lambda)$.

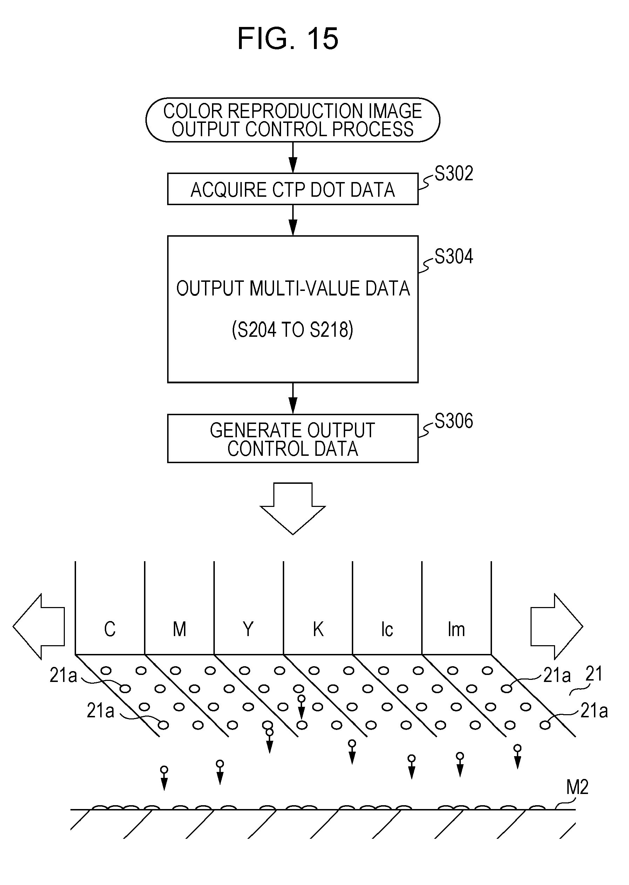

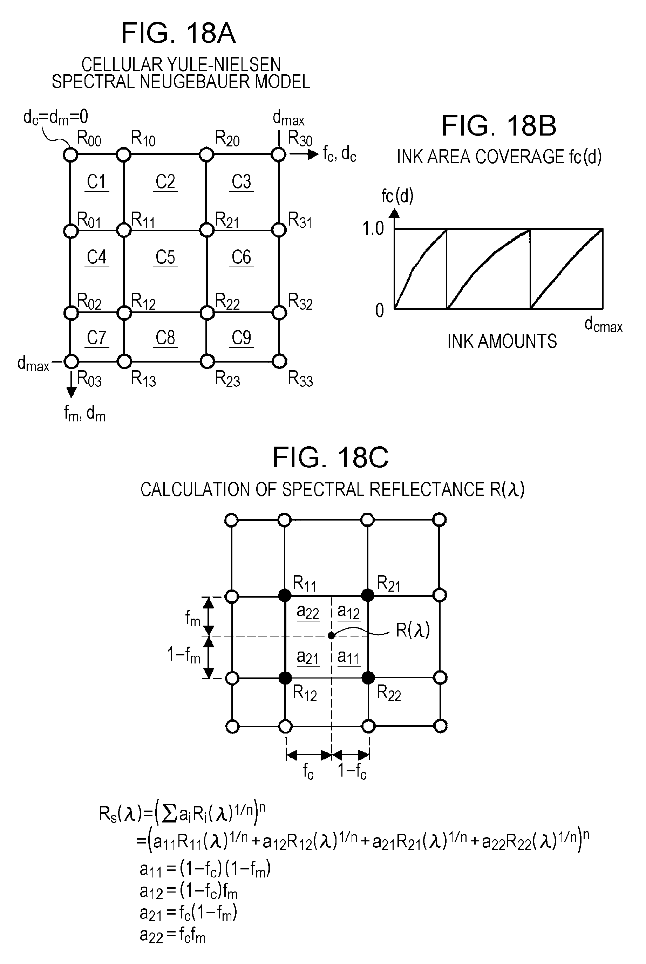

Here, with reference to Figs. 15 to 18C, a description will be made of a prediction model (spectral printing model) used in the RPM P3a2. Fig. 15 schematically exemplifies a recording head 21 of the proof printer 100. The recording head 21 has a plurality of nozzles 21a for each of CMYKlclm inks. The proof printer 100 performs control in which usage amounts of the respective CMYKlclm inks have the ink amount set $\phi$ ($d_c$, $d_m$, dy, $d_k$, $d_{lc}$, and $d_{lm}$). Ink droplets ejected from each of the nozzles 21a form a collection of a plurality of dots on the printing medium M2, and thus the color reproduction image 160 having an ink area coverage corresponding to the ink amount set $\phi$ ($d_c$, $d_m$, dy, $d_k$, $d_{lc}$, and $d_{lm}$) is formed on the printing medium M2.

The prediction model (spectral printing model) used in the RPM P3a2 allows spectral reflectance $R(\lambda)$ obtained when printing is performed by using any ink amount set $\phi$ ($d_c$, $d_m$, dy, $d_k$, $d_{lc}$, and $d_{lm}$) to be predicted as predicted spectral reflectance $R_s(\lambda)$. In the spectral printing model, a spectral reflectance database RDB is prepared which is obtained by printing color patches with respect to a plurality of representative points in an ink amount space and by measuring spectral reflectance $R(\lambda)$ thereof with a spectral reflectance meter. If prediction is performed according to a cellular Yule-Nielsen spectral Neugebauer model which uses the spectral reflectance database RDB, the predicted spectral reflectance $R_s(\lambda)$ obtained when printing is performed by using any ink amount set $\phi$ can be accurately predicted.

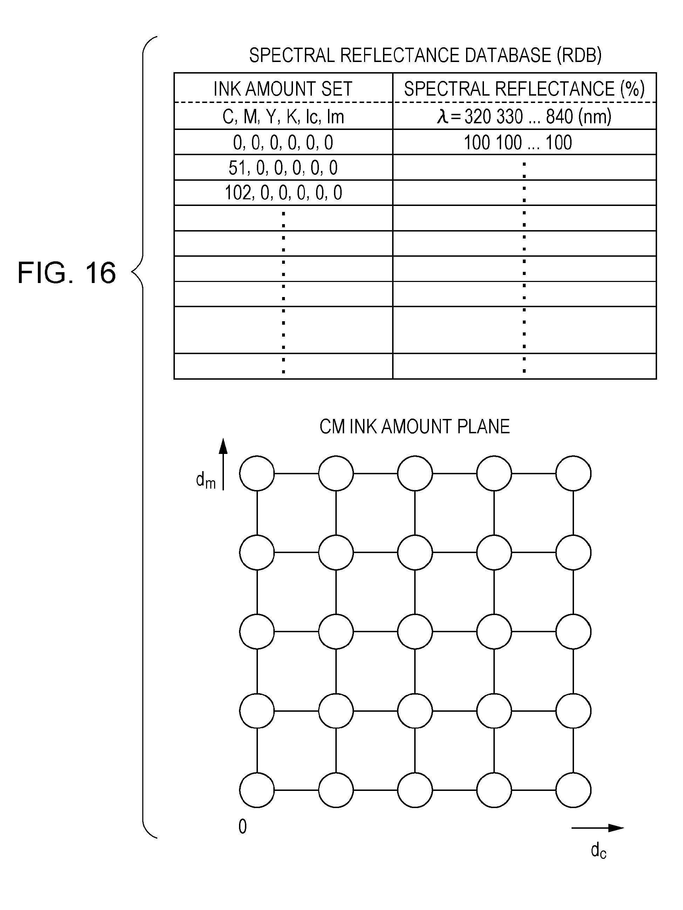

Fig. 16 schematically exemplifies a structure of the spectral reflectance database RDB. The ink amount space of the present embodiment is six-dimensional, but, for simplification of the drawing, only a CM plane is illustrated. The spectral reflectance database RDB is an LUT which describes spectral reflectance $R(\lambda)$ obtained through actual printing and measurement using the ink amount set ($d_c$, $d_m$, dy, $d_k$, $d_{lc}$, and $d_{lm}$) of a plurality of lattice points in the ink amount space. The LUT has a plurality of lattice points into which each ink amount axis is divided. In addition, actual printing and measurement may be performed on only some lattice points, and spectral reflectance $R(\lambda)$ may be predicted on the basis of spectral reflectance $R(\lambda)$ of the lattice points on which the actual printing and measurement have been performed, in relation to other lattice points. Consequently, it is possible to reduce the number of color patches on which actual printing and measurement are performed.

The spectral reflectance database RDB is prepared for each kind of printing medium. This is because the spectral reflectance $R(\lambda)$ is determined by spectral reflectance caused by an ink film (dot) formed on a printing medium and reflectance of the printing medium and is thus greatly influenced by a surface physical property (depending on a dot shape) or the reflectance of the printing medium.

The RPM P3a2 performs prediction according to the cellular Yule-Nielsen spectral Neugebauer model which uses the spectral reflectance database RDB in response to a request from the ICM P3a1. In this prediction, a prediction condition is acquired from the ICM P3a1, and the prediction condition is set. For example, a printing medium or the ink amount set $\phi$ is set as a printing condition. In a case where the prediction is performed by using glossy paper as printing paper, a spectral reflectance database RDB which is created by printing a color patch on the glossy paper is set.

If the spectral reflectance database RDB can be set, the ink amount set $\phi$ ($d_c$, $d_m$, dy, $d_k$, $d_{lc}$, and $d_{lm}$) input from the ICM P3a1 is applied to the spectral printing model. The cellular Yule-Nielsen spectral Neugebauer model is based on the well-known spectral Neugebauer model and Yule-Nielsen model. For simplification, a description will be made of a model in a case where three kinds of inks having CMY are used, but the same model can be applied to a model using an ink set having CMYKlclm of the present embodiment. Regarding the cellular Yule-Nielsen spectral Neugebauer model, refer to Color Res Appl 25, 4 to 19, 2000 and R Balasubramanian, Optimization of the spectral Neugebauer model for printer characterization, J. Electronic Imaging 8(2), 156 to 166 (1999).

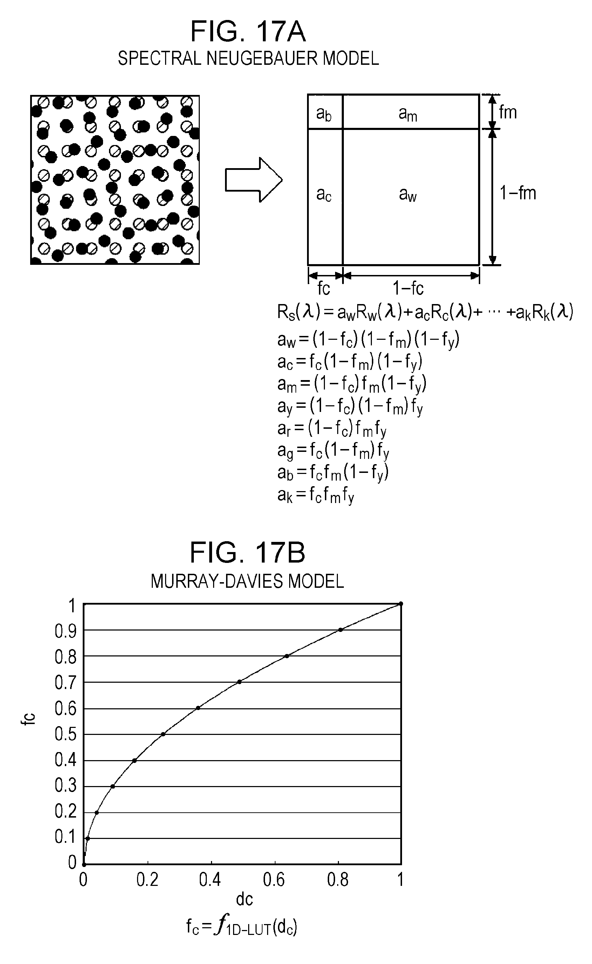

Figs. 17A and 17B schematically exemplify the spectral Neugebauer model. In the spectral Neugebauer model, a predicted spectral reflectance $R_s(\lambda)$ obtained when printing is performed by using any ink amount set ($d_c$, $d_m$, and dy) is given by the following Equation.

$$R_s(\lambda) = a_w R_w(\lambda) + a_c R_c(\lambda) + a_m R_m(\lambda) + a_y R_y(\lambda)$$
$$+ a_r R_r(\lambda) + a_g R_g(\lambda) + a_b R_b(\lambda) + a_k R_k(\lambda) \qquad \cdots(2)$$

$$a_w = (1-f_c)(1-f_m)(1-f_y)$$
$$a_c = f_c(1-f_m)(1-f_y)$$
$$a_m = (1-f_c)f_m(1-f_y)$$
$$a_y = (1-f_c)(1-f_m)f_y$$
$$a_r = (1-f_c)f_m f_y$$
$$a_g = f_c(1-f_m)f_y$$
$$a_b = f_c f_m(1-f_y)$$
$$a_k = f_c f_m f_y$$

Here, $a_i$ indicates an area ratio of an i-th region, and $R_i(\lambda)$ indicates spectral reflectance of the i-th region. The suffix i is different from i shown in Figs. 17A and 17B, and indicates any one of a region (w) having no ink, a region (c) having only a C ink, a region (m) having only an M ink, a region (y) having only a Y ink, a region (r) where the M ink and the Y ink are ejected, a region (g) where the Y ink and the C ink are ejected, a region (b) where the C ink and the M ink are ejected, and a region (k) where the three CMY inks are ejected. In addition, each of $f_c$, $f_m$, and fy indicates a ratio of an area covered with an ink (hereinafter, referred to as an "ink area coverage") when only one ink of the CMY inks is ejected.

The ink area coverages $f_c$, $f_m$, and fy are given by a Murray-Davies model illustrated in Fig. 17B. In the Murray-Davies model, for example, the ink area coverage $f_c$ of the C ink is a nonlinear function of a C ink amount $d_c$, and, the ink amount $d_c$ can be converted into the ink area coverage $f_c$ according to a one-dimensional look-up table. The reason why the ink area coverages $f_c$, $f_m$, and fy are nonlinear functions of the ink amounts $d_c$, $d_m$, and dy is that, if a small amount of ink is ejected per unit area, the ink sufficiently spreads, but if a large amount of ink is ejected, the ink spreads in an overlapping manner, and thus an area covered with the ink does not greatly increase. This is also the same for the MY inks.

If the Yule-Nielsen model regarding spectral reflectance is applied, the above Equation (2) is replaced with the following Equation (3a) or (3b).

$$R_s(\lambda)^{1/n} = a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n} \qquad \cdots(3a)$$

$$R_s(\lambda) = \{a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n}\}^n \qquad \cdots(3b)$$

Here, n is a predetermined coefficient of 1 or greater, and may be set to n=10, for example. Equations (3a) and (3b) are equations representing the Yule-Nielsen spectral Neugebauer model.

The cellular Yule-Nielsen spectral Neugebauer model employed in the present embodiment is a model in which the above-described ink amount space of the Yule-Nielsen spectral Neugebauer model is divided into a plurality of cells.

Fig. 18A illustrates an example of cell division in the cellular Yule-Nielsen spectral Neugebauer model. Herein, for simplification of description, cell division is illustrated in a two-dimensional ink amount space including two axes of ink amounts $d_c$ and $d_m$ of the CM inks. The ink area coverages $f_c$ and $f_m$ have a unique relationship with the ink amounts $d_c$ and $d_m$ in the above-described Murray-Davies model, and thus the axes may be considered to represent the ink area coverages $f_c$ and $f_m$. A white circle is a grid point (referred to as a "lattice point") of the cell division, and the two-dimensional ink amount (coverage) space is divided into nine cells C1 to C9. An ink amount set ($d_c$ and $d_m$) corresponding to each lattice point is an ink amount set corresponding to a lattice point defined in the spectral reflectance database RDB. In other words, the spectral reflectance $R(\lambda)$ of each lattice point can be obtained by referring to the above-described spectral reflectance database RDB. Therefore, spectral reflectances $R(\lambda)_{00}$, $R(\lambda)_{10}$, $R(\lambda)_{20}$, ... and $R(\lambda)_{33}$ of the respective lattice points can be obtained from the spectral reflectance database RDB.

In the present embodiment, the cell division is performed in a six-dimensional ink amount space of CMYKlclm, and coordinates of each lattice point are represented by a six-dimensional ink amount set $\phi$ ($d_c$, $d_m$, dy, $d_k$, $d_{lc}$, and $d_{lm}$).

The spectral reflectance R(λ) of a lattice point corresponding to the ink amount set φ of each lattice point is obtained from the spectral reflectance database RDB (for example, spectral reflectance of coated paper).

Fig. 18B illustrates a relationship between an ink area coverage $f_c$ and an ink amount $d_c$, used in the cell division model. Here, a range of 0 to $d_{cmax}$ of the ink amount of the single kind of ink is also divided into three sections, and a virtual ink area coverage $f_c$ used in the cell division model is obtained by using a nonlinear curve which monotonously increases from 0 to 1 for each section. In the same manner for the other inks, ink area coverages $f_m$ and fy are obtained.

Fig. 18C illustrates a method of calculating the predicted spectral reflectance $R_s(\lambda)$ in a case where printing is performed by using any ink amount set ($d_c$ and $d_m$) within the central cell C5 of Fig. 18A. The predicted spectral reflectance $R_s(\lambda)$ is given by the following equation when the printing is performed by using the ink amount set ($d_c$ and $d_m$).

$$R_s(\lambda) = \left( \sum a_i R_i(\lambda)^{1/n} \right)^n$$
$$= \left( a_{11} R_{11}(\lambda)^{1/n} + a_{12} R_{12}(\lambda)^{1/n} + a_{21} R_{21}(\lambda)^{1/n} + a_{22} R_{22}(\lambda)^{1/n} \right)^n \quad \cdots (4)$$
$$a_{11} = (1 - f_c)(1 - f_m)$$
$$a_{12} = (1 - f_c) f_m$$
$$a_{21} = f_c (1 - f_m)$$
$$a_{22} = f_c f_m$$

Here, the ink area coverages $f_c$ and $f_m$ in Equation (4) are values given by the graph of Fig. 18B. Spectral reflectances $R(\lambda)_{11}$, $R(\lambda)_{12}$, $R(\lambda)_{21}$ and $R(\lambda)_{22}$ corresponding to four lattice points surrounding the cell C5 can be obtained by referring to the spectral reflectance database RDB. Consequently, all values of the right side of Equation (4) can be specified, and, as a computation result thereof, the predicted spectral reflectance $R_s(\lambda)$ can be calculated in a case where printing is performed by using any ink amount set φ ($d_c$ and $d_m$). If the wavelength λ is sequentially shifted in a visible wavelength region, it is possible to obtain the predicted spectral reflectance $R_s(\lambda)$ in the visible wavelength region. If the ink amount space is divided into a plurality of cells, the predicted spectral reflectance $R_s(\lambda)$ can be calculated with higher accuracy than in a case where the ink amount space is not divided.

In the above-described way, the RPM P3a2 predicts the predicted spectral reflectance $R_s(\lambda)$ in response to the request from the ICM P3a1.

If the predicted spectral reflectance $R_s(\lambda)$ can be obtained, the color calculation module (CCM) P3a3 calculates predicted color values obtained when an object with the predicted spectral reflectance $R_s(\lambda)$ is irradiated by a plurality of observation light sources L0. As the predicted color values, for example, $L^*a^*b^*$ values of the CIE $L^*a^*b^*$ color space are used. A flow of calculating the predicted color values is the same as in Fig. 12 and the above Equation (1).

$$X = k \int P(\lambda) R_s(\lambda) x(\lambda) d\lambda$$
$$Y = k \int P(\lambda) R_s(\lambda) y(\lambda) d\lambda \qquad \cdots (5)$$
$$Z = k \int P(\lambda) R_s(\lambda) z(\lambda) d\lambda$$

As shown in Equation (5), spectra of spectral energy of the respective light sources are multiplied by the predicted spectral reflectance $R_s(\lambda)$, convolutional integration using the color matching functions is performed, and tristimulus values are converted into $L^*a^*b^*$ values, thereby obtaining predicted color values $L_d$, $a_d$ and $b_d$. The predicted color values are calculated for each observation light source.

The evaluation value calculation module (ECM) P3a4 calculates color differences ΔE between the target color values $L_{Dj}$, $a_{Dj}$, and $b_{Dj}$ and the predicted color values $L_d$, $a_d$ and $b_d$ for each observation light source. The color differences may be calculated according to $\Delta E = \{(L_d - L_{Dj})^2 + (a_d - a_{Dj})^2 + (b_d - b_{Dj})^2\}^{1/2}$, and may be calculated on the basis of a color difference expression ($\Delta E_{2000}$) of CIE DE2000. In a case where the D50 light source, the F10 light source, and the F2 light source are selected as the observation light sources L0, color differences between the respective light sources are denoted as $AE_{D50}$, $L\Delta E_{F10}$, and $\Delta E_{F2}$. An evaluation value I(φ) for evaluating proximity to the target color values $L_{Dj}$, $a_{Dj}$, and $b_{Dj}$ is an evaluation function depending on the ink usage amounts $d_c$, $d_m$, dy, $d_k$, $d_{lc}$, and $d_{lm}$, and may be calculated according to the following equation.

$$I(\phi) = \frac{\sum_{j=1}^{N} \left( w_j \Delta E_j \right)}{N} \qquad \cdots (6)$$

Here, j indicates an observation light source. In the above-described example, j=1 indicates the D50 light source, j=2 indicates the F10 light source, and j=3 indicates the F2 light source. N indicates the number of observation light sources. $\Delta E_j$ indicates color differences between the target color values $L_{Dj}$, $a_{Dj}$, and $b_{Dj}$ and the predicted color values $L_d$, $a_d$ and $b_d$ under the observation light source j. In addition, $w_j$ indicates weights for the color differences $\Delta E_j$ under each observation light source. In the present embodiment, the weights $w_j$ are described to be uniform, but need not be uniform.

The evaluation value $I(\phi)$ is reduced if each color difference $\Delta E_j$ is reduced, and has a property of being reduced as the target color values and the predicted color values are comprehensively close to each other under each observation light source. When the ICM (image color matching) P3a1 outputs the ink amount set $\phi$ to the RPM P3a2, the CCM P3a3, and the ECM P3a4, the evaluation value $I(\phi)$ is finally returned to the ICM P3a1. The ICM P3a1 repeatedly obtains the evaluation value $I(\phi)$ corresponding to the ink amount set $\phi$, so as to calculate an optimum solution of the ink amount set $\phi$ which causes the evaluation value $I(\phi)$ as an objective function to be minimized. As a method of calculating the optimum solution, for example, a nonlinear optimization method such as a gradient method may be used.

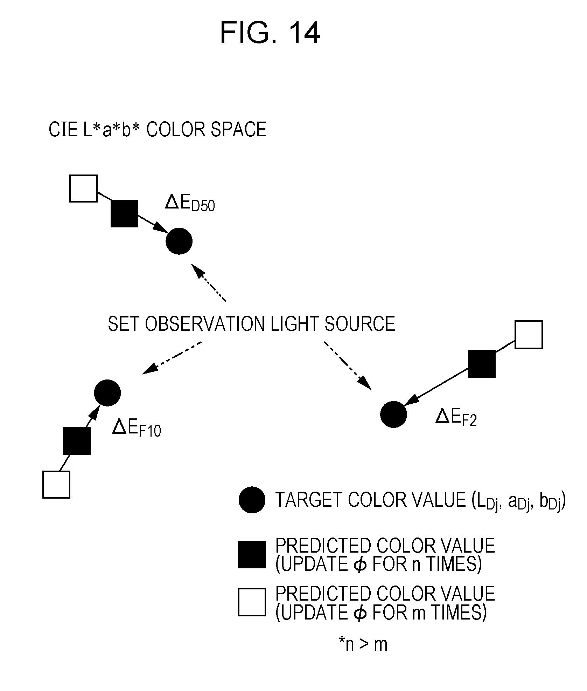

Fig. 14 illustrates the target color values $L_{Dj}$, $a_{Dj}$, and $b_{Dj}$ under each observation light source, and transition of the predicted color values $L_d$, $a_d$ and $b_d$ under each observation light source when the ink amount set $\phi$ is being optimized, in the CIE $L^*a^*b^*$ color space. The ink amount set $\phi$ ($d_c$, $d_m$, dy, $d_k$, $d_{lc}$, and $d_{lm}$) is optimized so that each color difference $\Delta E_j$ is gradually reduced. In the above-described way, the ink amount set $\phi$ is calculated which can cause colors having color values close to the target color values $L_{Dj}$, $a_{Dj}$, and $b_{Dj}$ to be reproduced in the color reproduction image 160 for each observation light source.

As a condition for finishing the optimization process, for example, a threshold value (for example, about 1 to 3) which is set in S402 of Fig. 19 and is compared with the color difference $\Delta E_j$ is denoted as $TE_j$, and the process is finished when the color difference $\Delta E_j$ is equal to or smaller than the threshold value $TE_j$. The threshold value $TE_j$ is set in each observation light source j, and the different observation light sources j may or may not have the same threshold value. If the color difference $\Delta E_j$ is equal to or smaller than the threshold value $TE_j$ for all the observation light sources j, the optimization process is finished. In the above-described way, the prediction section U42 predicts usage amounts of the second color materials CL2.

The predicted usage amount correlation section U43 correlates the usage amounts $d_c$, $d_m$, dy, $d_k$, $d_{lc}$, and $d_{lm}$ of the second color materials CL2 predicted by the prediction section U42 with the usage amounts Dc, Dm, Dy, and Dk of the first color materials CL1 so as to generate the MM_LUT 200 (S410 of Fig. 19). As in a case where the number N3 of the lattice points of the printing color profile PR1 is smaller than the number N2 of lattice points of the LUT 200, in relation to the lattice point G2 of which the color material usage amounts $d_c$, $d_m$, dy, $d_k$, $d_{lc}$, and $d_{lm}$ have not been predicted among the lattice points G2 forming the LUT 200, the lattice point G2 may be used as a focused lattice point, and color material usage amounts of the focused lattice point may be interpolated by using corresponding color material usage amounts of CMYKlclm of a plurality of lattice points G2 which are located near the lattice point G2 in the CMYK color space and of which the usage amounts have been predicted.

The LUT 200 generated in the above-described manner is registered in an MM_LUT database illustrated in Fig. 19 (S412), and is stored in the storage section U21 of the host apparatus H2, for example.

Fig. 15 exemplifies a color reproduction image output control process performed in the image forming system SY3 which includes the host apparatus H2 storing the LUT 200. This process is started, for example, when the host apparatus H2 receives a request for forming the color reproduction image 160.

If the process is started, the host apparatus H2 acquires the CTP dot data DT1 (S302). Next, the host apparatus H2 performs the processes in steps S204 to S218 of Fig. 9 so as to generate the multi-value data DT5 from the dot data DT1, and outputs the multi-value data DT5 to the proof printer 100 (S304). At this time, a DLP conversion process is performed on grayscale values of the peripheral part R32 of the dot in the input grayscale data DT2 generated from the dot data DT1 according to the DLP 400, and a color part plate process is performed on the entire intermediate grayscale data DT3 according to the MM_LUT 200. The proof printer 100 which receives the multi-value data DT5 indicating a dot formation situation allocates the multi-value data DT5 to each scanning pass and each of the nozzles 21a of the recording head 21 so as to generate output control data (S306). The recording head 21 forms ink dots on the printing medium M2 according to the output control data, and forms the proof 150 having the color reproduction image 160. The obtained color reproduction image 160 has favorable color reproduction accuracy for the dot image 360 formed by the printer body 300.

*(5) DLP Generation Example*

The DLP 400 may be generated by using the host apparatus H2. Fig. 20 illustrates an example of a DLP generation process performed by the host apparatus H2 including the DLP generation unit U5. The storage section U21 stores the above-described MM_LUT 200, and also stores a DLP 401 in which initial values are stored. The initial values of the DLP 401 may be obtained, for example, by correlating input grayscale values Rci, Rmi, Ryi, and Rki corresponding to the dot area ratios r with the same values Rci, Rmi, Ryi, and Rki as output grayscale values.

First, the host apparatus H2 acquires the CTP dot data DT1 (chart data) for forming the color chart 361 and attached data of the dot data (S502). Also here, the dot data is, for example, binary data of 2400 dpi $\times$ 2400 dpi. The attached data includes, for example, a resolution of the dot data DT1, and the number of screen lines as necessary. Next, the host apparatus H2 performs the processes in steps S204 to S218 of Fig. 9 so as to generate the multi-value data DT5 from the dot data DT1, and outputs the multi-value data DT5 to the proof printer 100 (S504). At this time, a DLP conversion process is performed on grayscale values of the peripheral part R32 of the dot in the input grayscale data DT2 generated from the dot data DT1 according to the DLP 401 which is currently being created, and a color part plate process is performed on the entire intermediate grayscale data DT3 according to the MM_LUT 200. The proof printer 100 which receives the multi-value data DT5 indicating a dot formation situation ejects CMYKlclm ink droplets according to the multi-value data DT5 so as to form the color chart 161 having a dot structure on the printing medium M2. In the above-described way, the dot printed matter 151 illustrated in Fig. 10 is formed. In addition, coordinates of lattice points corresponding to the patch 162 included in the color chart 161 may or may not match coordinates of the lattice points G1 in the DLP 400 illustrated in Fig. 7A. The number of patches 162 may be the same as the number N1 of lattice points in the DLP 400, and may be smaller than N1.

The host apparatus H2 measures a color of each patch 162 of the color chart 161 with the colorimeter 800 so as to acquire color measurement results L1i, a1i, and b1i (S506). Here, i is a variable for identifying the patch 162, and may or may not be the same as i for identifying the lattice point G1 of the DLP 400 illustrated in Fig. 7A. The number of patches 162 may or may not be the same as the number N1 of lattice points of the DLP 400. A light source for color measurement may be a single representative light source, for example, a light source provided in the colorimeter 800. In order to improve color reproduction, a plurality of kinds of light sources may be used for measuring colors. The color measurement results L1i, a1i, and b1i indicate $L^*a^*b^*$ values obtained by measuring a color of the patch 162 corresponding to the variable i with the colorimeter 800.

The host apparatus H2 acquires color measurement results L0i, a0i, and b0i of each patch 362 of the color chart 361 formed by the printer body 300 (S508). Here, i is a variable for identifying the patch 362, and is the same as the variable i for identifying the patch 162 of the color chart 161 formed by the proof printer 100. In S508, the color measurement results L0i, a0i, and b0i may be acquired by measuring a color of each patch 362 with the colorimeter 800, and the color measurement results L0i, a0i, and b0i which are obtained and stored in advance in the storage section may be read.

In S510, color differences $\Delta Ei$ between the color measurement results L1i, a1i, and b1i of the patch 162 and the color measurement results L0i, a0i, and b0i of the patch 362 are calculated for each combination of the corresponding patches 162 and 362. Also here, the color differences may be calculated according to $\Delta Ei = \{(L1i-L0i)^2+(a1i-a0i)^2+(b1i-b0i)\}^{1/2}$, and may be calculated on the basis of a color difference expression ($\Delta E_{2000}$) of CIE DE2000.

In S512, it is determined whether or not the color differences $\Delta Ei$ are within a criterion with respect to all combinations of the patches 162 and 362. The criterion is a criterion based on the color measurement results L0i, a0i, and b0i of the patch 362 formed by the printer body 300. The determination process in S512 may be a process in which a threshold value (for example, about 1 to 3) which is compared with the color difference $\Delta Ei$ is denoted as $T_E$, and it is determined whether or not the color difference $\Delta Ei$ is equal to or smaller than the threshold value $T_E$. If all the color difference $\Delta Ei$ are equal to or smaller than the threshold value $T_E$, the host apparatus H2 finishes the DLP generation process. The generated DLP 400 stores the storage section U21 of the host apparatus H2, for example.

On the other hand, if there is a color difference $\Delta Ei$ larger than the threshold value $T_E$, the host apparatus H2 acquires an ID (identification information) of the patch 162 having a relationship of $\Delta Ei > T_E$ (S514). This ID may be the variable i. Next, the host apparatus H2 corrects an output grayscale value corresponding to the ID in the DLP 401 which is currently being created (S516), and returns the process to S502.

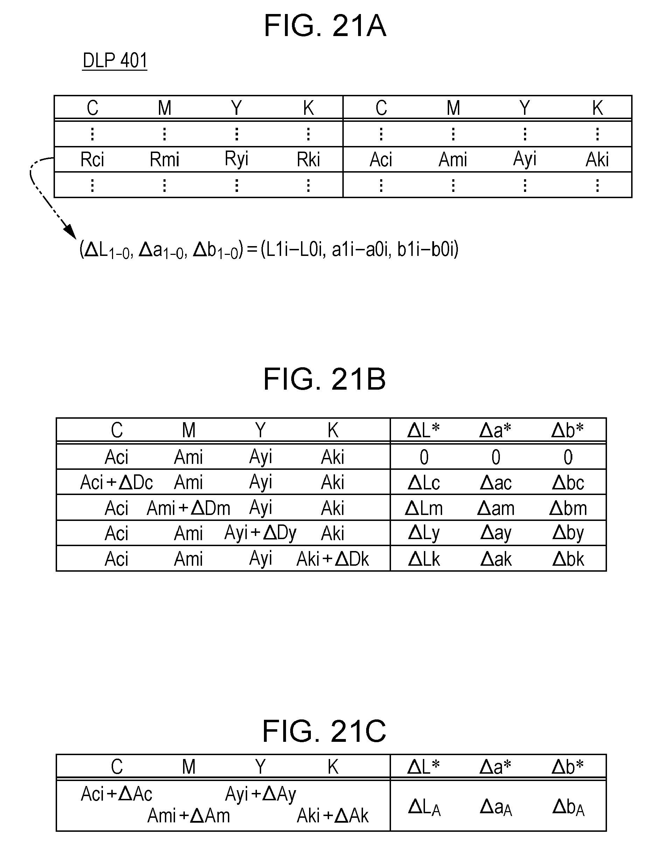

Figs. 21A to 21C schematically illustrate an example in which an output value of the currently created DLP 401 is corrected. First, as illustrated in Fig. 21A, as one of correspondence relationships included in the DLP 401, it is assumed that output grayscale values Aci, Ami, Ayi, and Aki are correlated with the input grayscale values Rci, Rmi, Ryi, and Rki. In addition, it is assumed that differences $\Delta L_{1-0}$, $\Delta a_{1-0}$, and $\Delta b_{1-0}$ between the color measurement results of the patches 162 and 362 are as follows.

$$\Delta L_{1-0} = L1i - L0i$$

$$\Delta a_{1-0} = a1i - a0i$$

$$\Delta b_{1-0} = b1i - b0i$$

In a case where $\Delta Ei > T_E$, it is necessary to correct the output grayscale values Aci, Ami, Ayi, and Aki so that the patch 162 having a relationship of $\Delta Ei \leq T_E$ is formed. For this reason, as illustrated in Fig. 21B, by using the color measurement results L1i, a1i, and b1i of the patch 162 obtained in a case of the output grayscale values Aci, Ami, Ayi, and Aki as references, differences from the existing color measurement results obtained when grayscale values $\Delta Dc$, $\Delta Dm$, $\Delta Dy$ and $\Delta Dk$ are separately added to the output grayscale values of CMYK are used. Here, differences of the color measurement results from the references L1i, a1i, and b1i are $\Delta Lc$, $\Delta ac$, and $\Delta bc$ in a case of output grayscale values Aci+$\Delta Dc$, Ami, Ayi, and Aki; differences of the color measurement results from the references are $\Delta Lm$, $\Delta am$, and $\Delta bm$ in a case of output grayscale values Aci, Ami+$\Delta Dc$, Ayi, and Aki; differences of the color measurement results from the references are $\Delta Ly$, $\Delta ay$, and $\Delta by$ in a case of output grayscale values Aci, Ami, Ayi+$\Delta Dc$, and Aki; and differences of the color measurement results from the references are $\Delta Lk$, $\Delta ak$, and $\Delta bk$ in a case of output grayscale values Aci, Ami, Ayi, and Aki+$\Delta Dc$. By using the values, as illustrated in Fig. 21C, differences $\Delta L_A$, $\Delta a_A$, and $\Delta b_A$ between color values in corrected output grayscale values Aci+$\Delta Ac$, Ami+$\Delta Am$, Ayi+$\Delta Ay$, and Aki+$\Delta Ak$ and the references L1i, a1i, and b1i are predicted. There is a high possibility that color values of the patch 162 formed after the output grayscale values are corrected become closer to the color measurement results L0i, a0i, and b0i of the patch 362 as the differences $\Delta L_A$, $\Delta a_A$ and $\Delta b_A$ becomes closer to $-\Delta L_{1-0}$, $-\Delta a_{1-0}$, and $-\Delta b_{1-0}$.

Therefore, the corrected output grayscale values Aci+$\Delta Ac$, Ami+$\Delta Am$, Ayi+$\Delta Ay$ and Aki+$\Delta Ak$ may be determined so that the differences $\Delta L_A$, $\Delta a_A$ and $\Delta b_A$ respectively become as close to $-\Delta L_{1-0}$, $-\Delta a_{1-0}$, and $-\Delta b_{1-0}$ as possible by using the differences between the color measurement results illustrated in Fig. 21B. The corrected output grayscale values which have been determined are stored in the DLP 401. The correction of the output grayscale values Aci, Ami, Ayi, and Aki is performed for all patches 162 having a relationship of $\Delta Ei > T_E$. The corrected DLP 401 is referred to when the process in S504 is performed again. If the color differences $\Delta Ei$ are within the criterion in all combinations of the patches 162 and 362 through the processes in steps S502 to S512, the DLP generation process is finished. The final DLP 401 defines a second correspondence relationship which is aimed at minimizing an exterior difference corresponding to the dot area ratio r of the dot image 360, caused by only the LUT 200, and which is set in consideration of bleeding or overflowing of the color materials CL2 having CMYKlclm. The DLP 401 is stored in, for example, the storage section U21 of the host apparatus H2 as the DLP 400.

As described above, the DLP generation unit U5 generates the DLP 400 so that a color measurement result of the patch 162 formed by the proof printer 100 when using the DLP 400 satisfies a criterion based on a color measurement result of the patch 362 formed by the printer body 300.

Since the printing control process of Fig. 9 is performed by using the above-described DLP 400, grayscale values indicating color material usage amounts Dc, Dm, Dy, and Dk of CMYK which can cause a dot image having a color tone corresponding to the dot area ratio r to be represented are stored in the intermediate grayscale data DT3 which has undergone the DLP conversion and is ready to undergo the color part plate process. Since the color part plate process, in which the LUT 200 having favorable metameric matching under a plurality of light sources is referred to, is performed on the intermediate grayscale data DT3, grayscale values indicating color material usage amounts $d_c$, $d_m$, dy, $d_k$, $d_{lc}$, and $d_{lm}$ of CMYKlclm which can cause a dot structure having high color reproduction accuracy corresponding to the dot area ratio r to be reproduced are stored in the output grayscale data DT4 having undergone the color part plate process. The color reproduction image 160 having a high quality dot structure is formed on the printing medium M2 according to the multi-value data DT5 which is obtained by performing a halftone process on the output grayscale data DT4. Therefore, according to the present technology, it is possible to reproduce a color tone of a dot image under a plurality of light sources with very high accuracy.

*(6) Modification Examples*

The invention may have various modification examples.

For example, the DLP 400 and the LUT 200 may be stored in the proof printer 100. In this case, the proof printer 100 constitutes an image processing apparatus. As long as the image processing apparatus of the present technology can generate output grayscale data on the basis of dot data, it is not essential that a color reproduction image is formed on a printing medium, and a case where a color reproduction image is displayed on a screen of an image output apparatus such as a display is also included in the present technology.

The second color materials used to form a color reproduction image in the image forming apparatus may employ not only a combination of CMYKlclm but also a combination of seven or more colors and a combination of five or less colors. Colors of color materials which can be used as the second color materials include not only CMYKlclm, but also orange (Or), green (Gr), blue (B), violet (V), dark yellow (dy), light black (lk), light light black (llk), and uncolor. An uncolored material includes a color material which gives gloss to a printing medium (in other words, makes a printed medium glossy), a color material which protects a colored material, and the like.

The above-described processes may be changed as appropriate, for example, by changing an order thereof. For example, in the printing control process of Fig. 9, the low-resolution multi-grayscale process in S206 may be performed prior to the dot area ratio calculation process in S204.

If the MM_LUT is used, a color of a dot image can be reproduced under a plurality of light sources with very high accuracy. However, even in a case where the color part plate LUT having favorable color reproduction only under a single light source is used, it is possible to obtain highly accurate color reproduction corresponding to a dot area ratio by performing the DLP conversion.

*(7) Conclusion*

As described above, according to the invention, it is possible to provide a technology and the like capable of improving color reproduction accuracy of a dot image. Of course, even in a technology or the like configured of only constituent requirements related to independent claims without including constituent requirements related to dependent claims, it is possible to achieve the above-described fundamental operations and effects.

In addition, there may be implementations of a configuration in which the respective configurations described in the embodiment and the modification examples are replaced with each other or a combination thereof is changed, a configuration in which the well-known technology and the configurations described in the embodiment and the modification examples are replaced with each other or a combination thereof is changed, and the like. The invention includes the configurations, and the like.

The foregoing description has been given by way of example only and it will be appreciated by a person skilled in the art that modifications can be made without departing from the scope of the present invention.

**Claims**

1. An image processing apparatus (H2) configured to generate data for reproducing a color of a dot image (360) formed by a printer (300) using a first color material (CL1), in an image forming apparatus (100), the image processing apparatus comprising:

   a grayscale data generation unit (U1) configured to generate input grayscale data (DT2) in which a grayscale value corresponding to a dot area ratio is stored in a peripheral part (R32) of a dot (R11), and a grayscale value corresponding to a color of a dot portion of the dot image is stored in a core part (R31) surrounded by the peripheral part, on the basis of dot data (DT1) indicating the dot image; and
   a color conversion unit (U2) configured to convert the input grayscale data into output grayscale data (DT4) indicating a usage amount of a second color material (CL2) used in the image forming apparatus,
   wherein the color conversion unit is configured to perform first color conversion on the grayscale value of the core part and to perform second color conversion different from the first color conversion on the grayscale value of the peripheral part.

2. The image processing apparatus according to claim 1, wherein, in the first color conversion, the grayscale value of the core part is converted according to a correspondence relationship between a usage amount of the first color material used to form the dot image and a usage amount of the second color material used to form a color reproduction image in the image forming apparatus, and
   wherein, in the second color conversion, a grayscale value corresponding to a dot area ratio is converted into a value indicating the usage amount of the first color material in the correspondence relationship, and the converted value is converted into a grayscale value indicating the usage amount of the second color material according to the correspondence relationship.

3. The image processing apparatus according to claim 2, wherein the color conversion unit is configured to generate intermediate grayscale data (DT3) obtained by converting the grayscale value of the peripheral part included in the input grayscale data into the value indicating the usage amount of the first color material in the correspondence relationship, and to convert the intermediate grayscale data into the output grayscale data (DT4) according to the correspondence relationship.

4. The image processing apparatus according to claim 2 or claim 3, wherein the color conversion unit (U2) includes a storage section (U21) that stores a profile (400) which defines a second correspondence relationship between a grayscale value corresponding to the dot area ratio and a usage amount of the first color material (CL1) in the correspondence relationship, and
wherein, in the second color conversion, a grayscale value corresponding to the dot area ratio is converted into a value indicating the usage amount of the first color material in the correspondence relationship according to the profile, and the converted value is converted into a grayscale value indicating the usage amount of the second color material (CL2) according to the correspondence relationship.

5. The image processing apparatus according to claim 4, further comprising:

    a profile generation unit (U5) configured to generate the profile so that a color measurement result of a patch (162) formed by the image forming apparatus (100) when using the profile satisfies a criterion based on a color measurement result of a patch (362) formed by the printer (300).

6. The image processing apparatus according to any one of claims 2 to 5, wherein the color conversion unit includes a storage section (U21) that stores a color part plate look-up table (200) which defines the correspondence relationship and which correlates a usage amount of the first color material (CL1) with a usage amount of the second color material (CL2) on the basis of an evaluation value for evaluating proximity to a target color value defined in a printing color profile which defines a correspondence relationship between a usage amount of the first color material and a target color value of the first color material having the usage amount used in the dot image under an observation light source (L0) for each of a plurality of observation light sources for observing the dot image (360), the usage amount of the second color material being predicted such that a color value of the second color material formed on the color reproduction image is close to the target color value for each observation light source.

7. The image processing apparatus according to any one of the preceding claims, wherein the dot data is binary data having a predetermined resolution, and
wherein the grayscale data generation unit (U1) is configured to convert the resolution of the dot data into a resolution of a color reproduction image formed by the image forming apparatus and to perform a multi-grayscale process on the dot data so as to generate the input grayscale data.

8. An image processing program for generating data for reproducing a color of a dot image (360) formed by a printer (300) using a first color material (CL1), in an image forming apparatus (100), the program causing a computer to realize:

    a grayscale data generation function of generating input grayscale data (DT2) in which a grayscale value corresponding to a dot area ratio is stored in a peripheral part (R32) of a dot, and a grayscale value corresponding to a color of a dot portion of the dot image is stored in a core part (R31) surrounded by the peripheral part, on the basis of dot data indicating the dot image; and
    a color conversion function of converting the input grayscale data into output grayscale data (DT4) indicating a usage amount of a second color material (CL2) used in the image forming apparatus (100),
    wherein, in the color conversion function, first color conversion is performed on the grayscale value of the core part, and second color conversion different from the first color conversion is performed on the grayscale value of the peripheral part.

# FIG. 1

FLOW OF DOT PROOF PRINTING

SY3

ACQUIRE CTP DOT DATA AND ATTACHED DATA (S102)

DT1

U1

EXAMPLE: 2400 dpi × 2400 dpi,
TWO GRAYSCALES, 175 lines/inch

R11
R12

CALCULATE DOT AREA RATIO r FOR EACH UNIT REGION (S104)

EXAMPLE: ABOUT 1 mm × 1 mm UNIT

LOW-RESOLUTION MULTI-GRAYSCALE PROCESS (S106)
DIVIDED INTO CORE PART AND PERIPHERAL PART (S108)
STORE GRAYSCALE VALUE CORRESPONDING TO
DOT AREA RATIO r IN PERIPHERAL PART (S110)

DT2

EXAMPLE: 1440 dpi × 1440 dpi, 256 GRAYSCALES

R31
R32
R33

CORE PART (Dc, Dm, Dy, Dk)   PERIPHERAL PART (Rc, Rm, Ry, Rk)

R31

R32

U2

COLOR PART PLATE (S114)        DLP CONVERSION (S112) → COLOR PART PLATE (S114)
(DT4)                           (DT3)                        (DT4)
U3                                                                    U3

HT PROCESS (S116) → COMBINE HT RESULTS (S118) ← HT PROCESS (S116)
(DT5)

DOT PROOF PRINTING (S120)

## FIG. 2

SY1

SY3

SY2

H2

HOST APPARATUS

DOT DATA — DT1

U1 →

INPUT GRAYSCALE DATA — DT2

U21

U2 → ← DLP 400
← MM_LUT 200

$(d_c, d_m, d_y, d_k, d_{lc}, d_{lm})$ — DT4

U3 →

HALFTONE DATA — DT5

H1

HOST APPARATUS

DT1

DOT DATA

300

PRINTER BODY
CL1

| C | M | Y | K |

100

PROOF PRINTER
CL2

| C | M | Y | K | lc | lm |

350

M1

360

150

M2

160

D50    F10    F2

L1     L2     L3

L0

# FIG. 3

$$r(w) = \frac{\text{NUMBER Nd OF PIXELS OF DOT PORTION}}{\text{NUMBER Nn OF PIXELS OF UNIT REGION (w)}}$$

**FIG. 4A**

**FIG. 4B**

EXAMPLE: a = 255

**FIG. 4C**

# FIG. 5

DT2

x →

EXAMPLE: FORMATION OF
ONLY C DOT
a = 255
AT r = 40%,
b = 102

R31
R32
R33

( AT r = 80%,
  b = 204 )

DLP ⌐ 400

DT3

x →

R31
R32
R33

## FIG. 6

GRAYSCALE VALUE $b_m$ OF M
(CORRESPONDING TO M DOT AREA RATIO $r_m$)

GRAYSCALE VALUE 0 OF C

DT2

R31m

R33

M

R32cm

R32c1
R32m0

R31b
R32m1
R31c

B

R32cm

C

R32c0

GRAYSCALE VALUE 0 OF M

GRAYSCALE VALUE $b_c$ OF C
(CORRESPONDING TO C DOT AREA RATIO $r_c$)

GRAYSCALE VALUE $a_c$ OF C

GRAYSCALE VALUE $a_m$ OF M

DLP — 400

DT3

GRAYSCALE VALUE $c_m$ OF M

R31m

R33

M

R32cm

R32c1
R32m0

R31b
R32m1
R31c

B

R32cm

C

R32c0

GRAYSCALE VALUE $c_c$ OF C

# FIG. 7A

<u>DLP 400</u>  (K VALUE IS FIXED TO CERTAIN VALUE)

G1 (N1 = Ng1⁴ POINTS)

G1 → CL1 / CL1

N1 POINTS

| C | M | Y | K | C | M | Y | K | |
|---|---|---|---|---|---|---|---|---|
| $Rc_1$ | $Rm_1$ | $Ry_1$ | $Rk_1$ | $Dc_1$ | $Dm_1$ | $Dy_1$ | $Dk_1$ | |
| $Rc_2$ | $Rm_2$ | $Ry_2$ | $Rk_2$ | $Dc_2$ | $Dm_2$ | $Dy_2$ | $Dk_2$ | |
| ⋮ | ⋮ | ⋮ | ⋮ | ⋮ | ⋮ | ⋮ | ⋮ | |
| $Rci$ | $Rmi$ | $Ryi$ | $Rki$ | $Dci$ | $Dmi$ | $Dyi$ | $Dki$ | |
| ⋮ | ⋮ | ⋮ | ⋮ | ⋮ | ⋮ | ⋮ | ⋮ | |
| 20 | 0 | 0 | 0 | 40 | 0 | 0 | 0 | ~CR1 |
| ⋮ | ⋮ | ⋮ | ⋮ | ⋮ | ⋮ | ⋮ | ⋮ | |
| 60 | 0 | 0 | 0 | 70 | 10 | 0 | 0 | ~CR2 |
| ⋮ | ⋮ | ⋮ | ⋮ | ⋮ | ⋮ | ⋮ | ⋮ | |
| 20 | 60 | 0 | 0 | 30 | 50 | 10 | 0 | ~CR3 |
| ⋮ | ⋮ | ⋮ | ⋮ | ⋮ | ⋮ | ⋮ | ⋮ | |
| $Rc_{N1}$ | $Rm_{N1}$ | $Ry_{N1}$ | $Rk_{N1}$ | $Dc_{N1}$ | $Dm_{N1}$ | $Dy_{N1}$ | $Dk_{N1}$ | |

# FIG. 7B

<u>MM_LUT 200</u>  (K VALUE IS FIXED TO CERTAIN VALUE)

G2 (N2 = Ng2⁴ POINTS)

G2 → CL1 / CL2

N2 POINTS

| C | M | Y | K | C | M | Y | K | Ic | Im |
|---|---|---|---|---|---|---|---|---|---|
| $Dc_1$ | $Dm_1$ | $Dy_1$ | $Dk_1$ | $d_{c1}$ | $d_{m1}$ | $d_{y1}$ | $d_{k1}$ | $d_{Ic1}$ | $d_{Im1}$ |
| $Dc_2$ | $Dm_2$ | $Dy_2$ | $Dk_2$ | $d_{c2}$ | $d_{m2}$ | $d_{y2}$ | $d_{k2}$ | $d_{Ic2}$ | $d_{Im2}$ |
| ⋮ | ⋮ | ⋮ | ⋮ | ⋮ | ⋮ | ⋮ | ⋮ | ⋮ | ⋮ |
| $Dci$ | $Dmi$ | $Dyi$ | $Dki$ | $d_{ci}$ | $d_{mi}$ | $d_{yi}$ | $d_{ki}$ | $d_{Ici}$ | $d_{Imi}$ |
| ⋮ | ⋮ | ⋮ | ⋮ | ⋮ | ⋮ | ⋮ | ⋮ | ⋮ | ⋮ |
| $Dc_{N2}$ | $Dm_{N2}$ | $Dy_{N2}$ | $Dk_{N2}$ | $d_{cN2}$ | $d_{mN2}$ | $d_{yN2}$ | $d_{kN2}$ | $d_{IcN2}$ | $d_{ImN2}$ |

# FIG. 8

# FIG. 9

```
  ( PRINTING CONTROL PROCESS )
              │
              ▼            ⌐S202        EXAMPLE
  ┌──────────────────────────┐          ──────
  │   ACQUIRE CTP DOT DATA    │         2400 dpi×2400 dpi,
  │     AND ATTACHED DATA     │         TWO GRAYSCALES,
  └──────────────────────────┘         175 lines/inch
              │
              ▼            ⌐S204
  ┌──────────────────────────┐
  │ CALCULATE DOT AREA RATIO r│         ABOUT 1 mm×1 mm UNIT
  │   FOR EACH UNIT REGION    │
  └──────────────────────────┘
              │
              ▼            ⌐S206        1440 dpi×1440 dpi,
  ┌──────────────────────────┐         256 GRAYSCALES,
  │     LOW-RESOLUTION        │         NEAREST NEIGHBOR METHOD
  │  MULTI-GRAYSCALE PROCESS  │
  └──────────────────────────┘
              │
              ▼            ⌐S208
  ┌──────────────────────────┐
  │  DIVIDED INTO CORE PART   │         EDGE DETECTION
  │    AND PERIPHERAL PART    │
  └──────────────────────────┘
              │
              ▼            ⌐S210
  ┌──────────────────────────┐
  │   STORE GRAYSCALE VALUE   │
  │ CORRESPONDING TO DOT AREA │
  │  RATIO r IN PERIPHERAL PART│
  └──────────────────────────┘
              │
              ▼            ⌐S212                    ⌐400
  ┌──────────────────────────┐           ┌──────────┐
  │   PERFORM DLP CONVERSION  │◄──────────│   DLP    │
  │     ON PERIPHERAL PART    │           └──────────┘
  └──────────────────────────┘
              │
              ▼            ⌐S214                    ⌐200
  ┌──────────────────────────┐           ┌──────────┐
  │   COLOR PART PLATE PROCESS│◄──────────│  MM_LUT  │
  │     (ALL DATA ITEMS)      │           └──────────┘
  └──────────────────────────┘
              │
              ▼            ⌐S216
  ┌──────────────────────────┐
  │     HALFTONE PROCESS      │
  └──────────────────────────┘
              │
              ▼            ⌐S218
  ┌──────────────────────────┐
  │  OUTPUT MULTI-VALUE DATA  │
  │     TO PROOF PRINTER      │
  └──────────────────────────┘
              │
              ▼
          (   END   )
```

# FIG. 10

# FIG. 11

PRINTING COLOR PROFILE PR11

(D50)

G3

N3 POINTS

| C | M | Y | K | L* | a* | b* |
|---|---|---|---|---|---|---|
| 0 | 0 | 0 | 0 | $L_{0-D50}$ | $a_{0-D50}$ | $b_{0-D50}$ |
| ⋮ | ⋮ | ⋮ | ⋮ | ⋮ | ⋮ | ⋮ |
| ⋮ | ⋮ | ⋮ | ⋮ | ⋮ | ⋮ | ⋮ |
| Dc | Dm | Dy | Dk | $L_{D-D50}$ | $a_{D-D50}$ | $b_{D-D50}$ |
| ⋮ | ⋮ | ⋮ | ⋮ | ⋮ | ⋮ | ⋮ |
| ⋮ | ⋮ | ⋮ | ⋮ | ⋮ | ⋮ | ⋮ |

PRINTING COLOR PROFILE PR12

(F10)

G3

N3 POINTS

| C | M | Y | K | L* | a* | b* |
|---|---|---|---|---|---|---|
| 0 | 0 | 0 | 0 | $L_{0-F10}$ | $a_{0-F10}$ | $b_{0-F10}$ |
| ⋮ | ⋮ | ⋮ | ⋮ | ⋮ | ⋮ | ⋮ |
| ⋮ | ⋮ | ⋮ | ⋮ | ⋮ | ⋮ | ⋮ |
| Dc | Dm | Dy | Dk | $L_{D-F10}$ | $a_{D-F10}$ | $b_{D-F10}$ |
| ⋮ | ⋮ | ⋮ | ⋮ | ⋮ | ⋮ | ⋮ |
| ⋮ | ⋮ | ⋮ | ⋮ | ⋮ | ⋮ | ⋮ |

PRINTING COLOR PROFILE PR13

(F2)

G3

N3 POINTS

| C | M | Y | K | L* | a* | b* |
|---|---|---|---|---|---|---|
| 0 | 0 | 0 | 0 | $L_{0-F2}$ | $a_{0-F2}$ | $b_{0-F2}$ |
| ⋮ | ⋮ | ⋮ | ⋮ | ⋮ | ⋮ | ⋮ |
| ⋮ | ⋮ | ⋮ | ⋮ | ⋮ | ⋮ | ⋮ |
| Dc | Dm | Dy | Dk | $L_{D-F2}$ | $a_{D-F2}$ | $b_{D-F2}$ |
| ⋮ | ⋮ | ⋮ | ⋮ | ⋮ | ⋮ | ⋮ |
| ⋮ | ⋮ | ⋮ | ⋮ | ⋮ | ⋮ | ⋮ |

PR1

$(N3 \leq N2)$

# FIG. 12

OBSERVATION LIGHT SOURCE

SPECTRAL ENERGY $P(\lambda)$

$\lambda$

×

TARGET

SPECTRAL REFLECTANCE $Rt(\lambda)$

$\lambda$

×

COLOR MATCHING FUNCTION

$z(\lambda)$  $y(\lambda)$  $x(\lambda)$

$\lambda$

NORMALIZE

TRISTIMULUS VALUES (X, Y, Z)

CONVERSION EXPRESSION

COLOR VALUE (L*, a*, b*)

EP 2 958 314 A1

# FIG. 13

U43

PREDICTED USAGE AMOUNT
CORRELATION SECTION

CORRELATES OPTIMUM
SOLUTION OF INK AMOUNT SET $\phi$
WITH Dc, Dm, Dy, AND Dk

OPTIMUM SOLUTION OF
INK AMOUNT SET $\phi$

P3a1

PRINTING
COLOR
PROFILES
PR11, PR12,...

Dc, Dm, Dy, Dk

ICM

UPDATE INK
AMOUNT SET $\phi$

CALCULATE
OPTIMUM SOLUTION

$(L_{Dj}, a_{Dj}, b_{Dj})$

INK AMOUNT SET $\phi$

P3a2

TARGET
CHROMATIC
VALUES

RPM

SPECTRAL
PRINTING MODEL

EVALUATION
VALUE $I(\phi)$

PREDICTED
SPECTRAL
REFLECTANCE

$R_s(\lambda)$

P3a3

RDB
SPECTRAL
REFLECTANCE
DATABASE

CCM

$$X = k\int P(\lambda)R_s(\lambda)x(\lambda)d\lambda$$

$$Y = k\int P(\lambda)R_s(\lambda)y(\lambda)d\lambda$$

$$Z = k\int P(\lambda)R_s(\lambda)z(\lambda)d\lambda$$

PREDICTED
COLOR VALUE
$L_d, a_d, b_d$

P3a4

ECM

$$I(\phi) = w_I \Delta E_I + ... + w_N \Delta E_N$$

OPTIMUM INK AMOUNT CAMERA MODULE GROUP (PREDICTION SECTION)

U42

# FIG. 14

CIE L*a*b* COLOR SPACE

$\Delta E_{D50}$

SET OBSERVATION LIGHT SOURCE

$\Delta E_{F10}$

$\Delta E_{F2}$

● TARGET COLOR VALUE ($L_{Dj}$, $a_{Dj}$, $b_{Dj}$)

■ PREDICTED COLOR VALUE
(UPDATE $\phi$ FOR n TIMES)

□ PREDICTED COLOR VALUE
(UPDATE $\phi$ FOR m TIMES)

*n > m

# FIG. 15

COLOR REPRODUCTION IMAGE
OUTPUT CONTROL PROCESS

ACQUIRE CTP DOT DATA — S302

OUTPUT MULTI-VALUE DATA

(S204 TO S218) — S304

GENERATE OUTPUT
CONTROL DATA — S306

| C | M | Y | K | Ic | Im |

21a    21a    21

21a    21a

M2

FIG. 16 {

SPECTRAL REFLECTANCE DATABASE (RDB)

| INK AMOUNT SET | SPECTRAL REFLECTANCE (%) |
|---|---|
| C, M, Y, K, Ic, Im | $\lambda = 320\ 330\ ...\ 840$ (nm) |
| 0, 0, 0, 0, 0, 0 | 100 100 ... 100 |
| 51, 0, 0, 0, 0, 0 | ⋮ |
| 102, 0, 0, 0, 0, 0 | ⋮ |
| ⋮ | ⋮ |
| | |
| | |
| | |
| | |
| ⋮ | ⋮ |

CM INK AMOUNT PLANE

$d_m$

$d_c$

0

# FIG. 17A
## SPECTRAL NEUGEBAUER MODEL

$$R_s(\lambda) = a_w R_w(\lambda) + a_c R_c(\lambda) + \cdots + a_k R_k(\lambda)$$
$$a_w = (1-f_c)(1-f_m)(1-f_y)$$
$$a_c = f_c(1-f_m)(1-f_y)$$
$$a_m = (1-f_c)f_m(1-f_y)$$
$$a_y = (1-f_c)(1-f_m)f_y$$
$$a_r = (1-f_c)f_m f_y$$
$$a_g = f_c(1-f_m)f_y$$
$$a_b = f_c f_m(1-f_y)$$
$$a_k = f_c f_m f_y$$

# FIG. 17B
## MURRAY-DAVIES MODEL

$$f_c = f_{\text{1D-LUT}}(d_c)$$

# FIG. 18A

CELLULAR YULE-NIELSEN
SPECTRAL NEUGEBAUER MODEL

$d_c=d_m=0$

$d_{max}$

$R_{00}$ — C1 — $R_{10}$ — C2 — $R_{20}$ — C3 — $R_{30}$ → $f_c, d_c$

$R_{01}$ — C4 — $R_{11}$ — C5 — $R_{21}$ — C6 — $R_{31}$

$R_{02}$ — C7 — $R_{12}$ — C8 — $R_{22}$ — C9 — $R_{32}$

$d_{max}$ — $R_{03}$ — $R_{13}$ — $R_{23}$ — $R_{33}$

$f_m, d_m$

# FIG. 18B

INK AREA COVERAGE $f_c(d)$

$f_c(d)$

1.0

0

$d_{cmax}$

INK AMOUNTS

# FIG. 18C

CALCULATION OF SPECTRAL REFLECTANCE $R(\lambda)$

$f_m$

$1-f_m$

$R_{11}$   $R_{21}$

$a_{22}$ | $a_{12}$   $R(\lambda)$

$a_{21}$ | $a_{11}$

$R_{12}$   $R_{22}$

$f_c$   $1-f_c$

$$R_s(\lambda) = \left( \sum a_i R_i(\lambda)^{1/n} \right)^n$$
$$= \left( a_{11} R_{11}(\lambda)^{1/n} + a_{12} R_{12}(\lambda)^{1/n} + a_{21} R_{21}(\lambda)^{1/n} + a_{22} R_{22}(\lambda)^{1/n} \right)^n$$
$$a_{11} = (1-f_c)(1-f_m)$$
$$a_{12} = (1-f_c)f_m$$
$$a_{21} = f_c(1-f_m)$$
$$a_{22} = f_c f_m$$

# FIG. 19

```
( MM_LUT GENERATION PROCESS )
            |
            ↓              ~S402
┌──────────────────────────────┐
│       SET METAMERIC          │
│   MATCHING CONDITIONS        │
│                              │
│  · SELECT LIGHT SOURCE       │
│  · SELECT WEIGHT             │
│  · SELECT REFERENCE          │
│    PRINTING CONDITION        │
└──────────────────────────────┘
            |
            ↓              ~S404
┌──────────────────────────────┐
│     ACQUIRE PRINTING         │
│     COLOR PROFILE            │
└──────────────────────────────┘
            |
            ↓              ~S406
┌──────────────────────────────┐
│    TARGET COLOR VALUE        │
│    MODIFYING PROCESS         │
└──────────────────────────────┘
            |
            ↓              ~S408
┌──────────────────────────────┐
│    CALCULATE OPTIMUM         │
│    INK AMOUNT                │
└──────────────────────────────┘
            |
            ↓              ~S410
┌──────────────────────────────┐
│     GENERATE MM_LUT          │
└──────────────────────────────┘
            |
            ↓              ~S412
┌──────────────────────────────┐
│     REGISTER MM_LUT          │
│     IN DATABASE              │
└──────────────────────────────┘
            |
            ↓
       (    END    )
```

MM_LUT
DATABASE

PRINTING
COLOR PROFILE
DATABASE

EXAMPLE

FIRST LIGHT SOURCE: D50
SECOND LIGHT SOURCE: F10
THIRD LIGHT SOURCE: F2
PRINTING: OFFSET
PAPER: COATED PAPER

$L*a*b*$(D50)
$L*a*b*$(F10)
$L*a*b*$(F2)

$L*'a*'b*'$(D50)
$L*'a*'b*'$(F10)
$L*'a*'b*'$(F2)

CMYKLcLm

# FIG. 20

DLP GENERATION PROCESS

EXAMPLE

S502

ACQUIRE CTP DOT DATA FOR CHART AND ATTACHED DATA

2400 dpi×2400 dpi, TWO GRAYSCALES, 175 lines/inch

S504

PRINT COLOR CHART
( PRINTING CONTROL
PROCESS S204 TO S218 )

DLP — 401

MM_LUT — 200

S506

ACQUIRE EACH COLOR MEASUREMENT RESULT OF EACH PATCH PRINTED BY PROOF PRINTER

$(L1i, a1i, b1i)$

S508

ACQUIRE EACH COLOR MEASUREMENT RESULT OF EACH PATCH PRINTED BY PRINTER BODY

$(L0i, a0i, b0i)$
ACQUIRED COLOR MEASUREMENT VALUE MAY BE READ

S510

CALCULATE COLOR DIFFERENCE $\Delta Ei$ FOR EACH PATCH

S512

ARE ALL COLOR DIFFERENCES WITHIN CRITERION?

YES

NO

S514

ACQUIRE NECESSARY CORRECTED PATCH ID

END

S516

CORRECT DLP OUTPUT VALUE

DLP — 401

# FIG. 21A

DLP 401

| C | M | Y | K | C | M | Y | K |
|---|---|---|---|---|---|---|---|
| ⋮ | ⋮ | ⋮ | ⋮ | ⋮ | ⋮ | ⋮ | ⋮ |
| Rci | Rmi | Ryi | Rki | Aci | Ami | Ayi | Aki |
| ⋮ | ⋮ | ⋮ | ⋮ | ⋮ | ⋮ | ⋮ | ⋮ |

$(\Delta L_{1\text{-}0}, \Delta a_{1\text{-}0}, \Delta b_{1\text{-}0}) = (L1i - L0i, a1i - a0i, b1i - b0i)$

# FIG. 21B

| C | M | Y | K | $\Delta L^*$ | $\Delta a^*$ | $\Delta b^*$ |
|---|---|---|---|---|---|---|
| Aci | Ami | Ayi | Aki | 0 | 0 | 0 |
| Aci+$\Delta$Dc | Ami | Ayi | Aki | $\Delta$Lc | $\Delta$ac | $\Delta$bc |
| Aci | Ami+$\Delta$Dm | Ayi | Aki | $\Delta$Lm | $\Delta$am | $\Delta$bm |
| Aci | Ami | Ayi+$\Delta$Dy | Aki | $\Delta$Ly | $\Delta$ay | $\Delta$by |
| Aci | Ami | Ayi | Aki+$\Delta$Dk | $\Delta$Lk | $\Delta$ak | $\Delta$bk |

# FIG. 21C

| C | M | Y | K | $\Delta L^*$ | $\Delta a^*$ | $\Delta b^*$ |
|---|---|---|---|---|---|---|
| Aci+$\Delta$Ac | Ami+$\Delta$Am | Ayi+$\Delta$Ay | Aki+$\Delta$Ak | $\Delta L_A$ | $\Delta a_A$ | $\Delta b_A$ |

# FIG. 22A

# FIG. 22B

# FIG. 23  COMPARATIVE EXAMPLE

Europäisches
Patentamt

European
Patent Office

Office européen
des brevets

**EUROPEAN SEARCH REPORT**

Application Number

EP 15 16 8819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/259791 A1 (HAYASHI TAKUMA [JP] ET AL) 14 October 2010 (2010-10-14)<br>* abstract; figure 4 *<br>* figures 10a-10h *<br>----- | 1-8 | INV.<br>H04N1/60<br>H04N1/58 |
| A | EP 0 779 736 A2 (DAINIPPON SCREEN MFG [JP]) 18 June 1997 (1997-06-18)<br>* abstract *<br>----- | 1-8 | |
| A | BALASUBRAMANIAN R: "OPTIMIZATION OF THE SPECTRAL NEUGEBAUER MODEL FOR PRINTER CHARACTERIZATION",<br>JOURNAL OF ELECTRONIC IMAGING, SPIE / IS & T, 1000 20TH ST. BELLINGHAM WA 98225-6705 USA,<br>vol. 8, no. 2, 1 April 1999 (1999-04-01), pages 156-166, XP000825806,<br>ISSN: 1017-9909, DOI: 10.1117/1.482694<br>* the whole document *<br>----- | 1-8 | |
| A | JP 2009 200820 A (SEIKO EPSON CORP) 3 September 2009 (2009-09-03)<br>* abstract *<br>----- | 1-8 | TECHNICAL FIELDS SEARCHED (IPC)<br>H04N |
| A | EP 1 560 418 A2 (FUJI PHOTO FILM CO LTD [JP]) 3 August 2005 (2005-08-03)<br>* abstract *<br>----- | 1-8 | |

The present search report has been drawn up for all claims

| Place of search | Date of completion of the search | Examiner |
|---|---|---|
| The Hague | 31 July 2015 | Stoffers, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 8819

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2015

| Patent document cited in search report | | Publication date | Patent family member(s) | | Publication date |
|---|---|---|---|---|---|
| US 2010259791 | A1 | 14-10-2010 | JP | 5381378 B2 | 08-01-2014 |
| | | | JP | 2010264739 A | 25-11-2010 |
| | | | US | 2010259791 A1 | 14-10-2010 |
| EP 0779736 | A2 | 18-06-1997 | DE | 69632621 D1 | 08-07-2004 |
| | | | DE | 69632621 T2 | 09-06-2005 |
| | | | EP | 0779736 A2 | 18-06-1997 |
| | | | JP | 3436851 B2 | 18-08-2003 |
| | | | JP | H09224158 A | 26-08-1997 |
| | | | US | 5881211 A | 09-03-1999 |
| JP 2009200820 | A | 03-09-2009 | JP | 4946908 B2 | 06-06-2012 |
| | | | JP | 2009200820 A | 03-09-2009 |
| EP 1560418 | A2 | 03-08-2005 | EP | 1560418 A2 | 03-08-2005 |
| | | | JP | 2005217758 A | 11-08-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010264739 A

- JP 2009200820 A

**Non-patent literature cited in the description**

- **YULE-NIELSEN.** spectral Neugebauer model. *Color Res Appl,* 2000, vol. 25, 4-19

- **R BALASUBRAMANIAN.** Optimization of the spectral Neugebauer model for printer characterization. *J. Electronic Imaging,* 1999, vol. 8 (2), 156-166